(19) Europäisches Patentamt European Patent Office Office européen des brevets

(11) EP 4 629 572 A1

(12) **EUROPEAN PATENT APPLICATION**
published in accordance with Art. 153(4) EPC

(43) Date of publication:
08.10.2025 Bulletin 2025/41

(21) Application number: 22966770.4

(22) Date of filing: 29.11.2022

(51) International Patent Classification (IPC):
*H04L 27/00* (2006.01)

(52) Cooperative Patent Classification (CPC):
H04L 27/00

(86) International application number:
PCT/CN2022/135094

(87) International publication number:
WO 2024/113172 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: GUANGDONG OPPO MOBILE
TELECOMMUNICATIONS
CORP., LTD.
Dongguan, Guangdong 523860 (CN)

(72) Inventors:
• CUI, Shengjiang
  Dongguan, Guangdong 523860 (CN)
• XU, Weijie
  Dongguan, Guangdong 523860 (CN)
• ZHANG, Jinyu
  Dongguan, Guangdong 523860 (CN)

(74) Representative: Mewburn Ellis LLP
Aurora Building
Counterslip
Bristol BS1 6BX (GB)

(54) **WIRELESS COMMUNICATION METHOD, AND DEVICE**

(57) A wireless communication method, and a device. The method comprises: a target device receiving a plurality of backscatter signals, which are sent by each anchor device of a plurality of anchor devices, wherein the frequencies of the plurality of backscatter signals are different; and determining distance information between the target device and each anchor device according to phase information of the plurality of backscatter signals, which are sent by each anchor point device, wherein distance information between the target device and the plurality of anchor devices is used for determining position information of the target device.

200

| Target device | Anchor device-1 | ... | Anchor device-N |

S210, a plurality of backscatter signals, the plurality of backscatter signals have different frequencies

S220, determining distance information between the target device and each anchor device according to phase information of the plurality of backscatter signals transmitted by each anchor device

FIG. 11

Description

## TECHNICAL FIELD

Embodiments of the present application relate to the field of communications, and specifically to a wireless communication method and a device.

## BACKGROUND

In outdoor environments, mobile terminal positioning can achieve high accuracy thanks to global positioning system (GPS) systems and independent cellular systems. However, in indoor environments and environments with deep shadow effects, satellite signals and cellular signals are vulnerable to interrupt, which makes positioning a problem. Zero-power consumption devices are used to assist positioning due to their characteristics including low complexity, low cost, maintenance-free, battery-free, supporting power harvesting and backscatter communication. In this case, how to achieve assisted positioning through zero-power consumption devices is an urgent problem to be solved.

## SUMMARY

A wireless communication method and a device are provided in the present application, which can achieve accurate assisted positioning through zero-power consumption devices.

In a first aspect, a wireless communication method is provided, which includes: receiving, by a target device, a plurality of backscatter signals transmitted by each of a plurality of anchor devices, where the plurality of backscatter signals have different frequencies; and determining distance information between the target device and each anchor device according to phase information of the plurality of backscatter signals transmitted by each anchor device, where the distance information between the target device and the plurality of anchor devices is used to determine location information of the target device.

In a second aspect, a wireless communication method is provided, which includes: transmitting, by an anchor device, a plurality of backscatter signals to a target device, where the plurality of backscatter signals have different frequencies, and phase information of the plurality of backscatter signals transmitted by the anchor device is used to determine distance information between the target device and each of the anchor devices.

In a third aspect, a terminal device is provided, which is configured to perform the method in the above first aspect or its various implementations.

Specifically, the terminal device includes a functional module configured to perform the method in the above first aspect or its various implementations.

In a fourth aspect, a network device is provided, which is configured to perform the method in the second aspect or its various implementations.

Specifically, the network device includes a functional module configured to perform the method in the above second aspect or its various implementations.

In a fifth aspect, a terminal device is provided, which includes a processor and a memory. The memory is configured to store a computer program, and the processor is configured to call and run the computer program stored in the memory to perform the method in the above first aspect or its various implementations.

In a sixth aspect, a network device is provided, which includes a processor and a memory. The memory is configured to store a computer program, and the processor is configured to call and run the computer program stored in the memory to perform the method in the above second aspect or its various implementations.

In a seventh aspect, a chip is provided, which is configured to implement the method in any one of the first aspect and the second aspect in above or their implementations.

Specifically, the chip includes a processor, which is configured to call a computer program from a memory and run the computer program, to cause a device equipped with the device to perform the method in any one of the first aspect and the second aspect in above or their implementations.

In an eighth aspect, a computer-readable storage medium is provided, which is configured to store a computer program. The computer program enables a computer to perform the method in any one of the first aspect and the second aspect in above or their implementations.

In a ninth aspect, a computer program product is provided, which includes computer program instructions. The computer program instructions enable a computer to perform the method in any one of the first aspect and the second aspect in above or their implementations.

In a tenth aspect, a computer program is provided. When executed on a computer, the computer program causes the computer to perform the method in any one of the first aspect and the second aspect in above or their implementations.

Based on the above technical solutions, the target device may determine the distance between the target device and each anchor device based on the phase information of the plurality of backscatter signals having different frequencies transmitted by each of the plurality of anchor devices. Furthermore, the distance between the target device and each anchor device and the location information of the plurality of anchor devices may be used to determine the location information of the target device, thereby realizing device positioning based on backscatter communication.

## BRIEF DESCRIPTION OF THE DRAWINGS

FIG. 1 is a schematic diagram illustrating a communication system architecture provided in the embodiments of the present application.

FIG. 2 is a schematic diagram of a zero-power consumption communication system according to an example of the present application.

FIG. 3 is a schematic diagram illustrating power harvesting according to an embodiment of the present application.

FIG. 4 is a schematic diagram illustrating backscatter communication according to an embodiment of the present application.

FIG. 5 is a circuit schematic diagram of resistive load modulation according to an embodiment of the present application.

FIG. 6 is a schematic diagram illustrating backscatter communication.

FIGS. 7 to 10 are examples of positioning scenarios to which the embodiments of the present application are applicable.

FIG. 11 is a schematic communication diagram of a wireless communication method provided according to the embodiments of the present application.

FIGS. 12 and 13 are schematic diagrams of application scenarios to which the embodiments of the present application are applicable.

FIG. 14 is a schematic diagram illustrating backscatter communication according to the embodiments of the present application.

FIGS. 15 to 17 are schematic diagrams illustrating a transmitting manner of carrier signals provided in the embodiments of the present application.

FIG. 18 is a schematic diagram illustrating a frequency-domain offset between backscatter signals and carrier signals according to an embodiment of the present application.

FIG. 19 is a schematic diagram illustrating a frequency-domain offset between backscatter signals and carrier signals according to another embodiment of the present application.

FIG. 20 is a schematic diagram illustrating a time-domain offset between a backscatter signal and a carrier signal according to an embodiment of the present application.

FIG. 21 is a schematic diagram illustrating a time-domain offset between a backscatter signal and a carrier signal according to another embodiment of the present application.

FIG. 22 is a schematic diagram illustrating a mode for a plurality of anchor devices to transmit carrier signals according to an embodiment of the present application.

FIG. 23 is a schematic diagram illustrating a mode for a plurality of anchor devices to transmit carrier signals according to another embodiment of the present application.

FIG. 24 is a schematic diagram of an information structure defined for backscatter signals according to an embodiment of the present application.

FIG. 25 is a schematic diagram of an information structure defined for backscatter signals according to another embodiment of the present application.

FIG. 26 is a schematic diagram of a transmitting mode of control information according to an embodiment of the present application.

FIG. 27 is a schematic diagram of a transmitting mode of control information according to another embodiment of the present application.

FIG. 28 is a schematic diagram illustrating another backscatter communication provided in the embodiments of the present application.

FIG. 29 is a schematic diagram illustrating yet another backscatter communication provided in the embodiments of the present application.

FIG. 30 is a schematic diagram illustrating a frequency domain relationship between a plurality of backscatter signals and a carrier signal provided in the embodiments of the present application.

FIG. 31 is a schematic diagram illustrating another frequency domain relationship between a plurality of backscatter signals and a carrier signal provided in the embodiments of the present application.

FIG. 32 is a schematic diagram of a transmitting mode of a backscatter signal provided in the embodiments of the present application.

FIG. 33 is a schematic diagram of another transmitting mode of a backscatter signal provided in the embodiments of the present application.

FIG. 34 is a schematic block diagram of a communication device provided according to the embodiments of the present application.

FIG. 35 is a schematic block diagram of another communication device provided according to the embodiments of the present application.

FIG. 36 is a schematic block diagram of yet another communication device provided according to the embodiments of the present application.

FIG. 37 is a schematic block diagram of a chip provided according to the embodiments of the present application.

FIG. 38 is a schematic block diagram of a communication system provided according to the embodiments of the present application.

## DETAILED DESCRIPTION

The technical solutions in the embodiments of the present application will be described with reference to the drawings in the embodiments of the present application, and apparently, the described embodiments are a part of the embodiments of the present application, but not all of the embodiments. For the embodiments of the present application, all other embodiments obtained by the ordinary skilled in the art without paying creative efforts belong to the protection scope of the present application.

The technical solutions in the embodiments of the present application may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLAN), wireless fidelity (Wi-Fi), a 5th-generation (5G) system, a cellular Internet of Things system, a cellular passive Internet of Things system, or other communication system.

Generally speaking, a number of connections supported by a traditional communication system is limited and is easy to implement, however, with the development of the communication technology, the mobile communication system will not only support the traditional communication, but also support, for example, device to device (D2D) communication, machine to machine (M2M) communication, machine type communication (MTC), vehicle to vehicle (V2V) communication, sidelink (SL) communication, or vehicle to everything (V2X) communication, etc., and the embodiments of the present application may also be applied to these communication systems.

Optionally, a communication system in the embodiments of the present application may be applied to a carrier aggregation (CA) scenario, a dual connectivity (DC) scenario, or a standalone (SA) networking scenario.

Optionally, the communication system in the embodiments of the present application may be applied to an unlicensed spectrum, where the unlicensed spectrum may also be considered as a shared spectrum; or, the communication system in the embodiments of the present application may also be applied to an licensed spectrum, where the licensed spectrum may also be considered as an unshared spectrum.

The embodiments of the present application describe various embodiments in conjunction with a network device and a terminal device. The terminal device may also be referred to as a user equipment (UE), an access terminal, a user unit, a user station, a mobile station, a mobile console, a remote station, a remote terminal, a mobile device, a user terminal, a terminal, a wireless communication device, a user agent, a user device, or the like.

In the embodiments of the present application, the network device may be a device for communicating with a mobile device, such as an access network device. The network device may be an access point (AP) in WLAN, a base station (Base Transceiver Station, BTS) in GSM or CDMA, a base station (NodeB, NB) in WCDMA, an evolved base station (Evolutional NodeB, eNB or eNodeB) in LTE, a relay station or access point, an in-vehicle device, a wearable device, a network device (gNB) in an NR network, or a network device in a future evolved PLMN network, or a network device in an NTN network, etc.

By way of example and not limitation, in the embodiments of the present application, the network device may have a mobile characteristic. For example, the network device may be mobile equipment. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station set up on land, water, or the like.

In the embodiments of the present application, the network device may provide services for a cell, and the terminal device may communicate with the network device through transmission resources (e.g., frequency domain resources, or spectrum resources) used by the cell. The cell may be a cell corresponding to the network device (e.g., a base station). The cell may belong to a macro base station or a base station corresponding to a small cell. The small cell here may include: a metro cell, a micro cell, a pico cell, a femto cell, etc. These small cells have characteristics of small coverage and low transmission power, and are suitable for providing high-rate data transmission services.

The terminal device may be a station (ST) in WLAN, which may be a cellular phone, a cordless phone, a session initiation protocol (SIP) phone, a wireless local loop (WLL) station, a personal digital assistant (PDA) device, a handheld device with wireless communication functions, a computing device or other processing devices connected to a wireless modem, an in-vehicle device, a wearable device, a terminal device in a next-generation communication system (such as an NR network), a terminal device in a future evolved public land mobile network (PLMN) network, a terminal device in a cellular Internet of Things, a terminal device in a cellular passive Internet of Things, or the like.

In the embodiments of the present application, the terminal device may be deployed on land, including indoor or outdoor, handheld, wearable, or in-vehicle; the terminal device may also be deployed on water (e.g., on a steamship); and the terminal device may also be deployed in air (e.g., on an airplane, on a balloon, or on a satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

By way of example and not limitation, in the embodiments of the present application, the terminal device may also be a wearable device. The wearable device may also be referred to as a wearable smart device, which is a general term for wearable devices developed by using wearable technology and intelligent design for everyday wear, such as glasses, gloves, a watch, clothing, or shoes. The wearable device is a portable device that is worn directly on a body, or integrated into a user's clothing or accessories. The wearable device is not only a hardware device, but also implements powerful functions through software support as well as data interaction or cloud interaction. Generalized wearable smart devices include full-featured, large-sized devices that may implement full or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

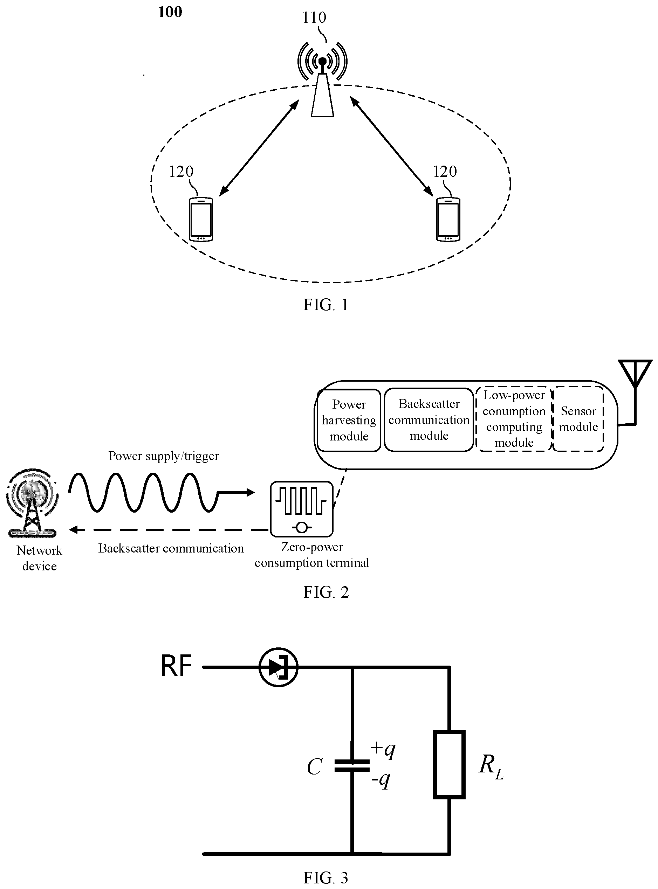

For example, a communication system 100 to which the embodiments of the present application are applicable is shown in FIG. 1. The communication system 100 may include a network device 110, the network device 110 may be a device communicating with a terminal device 120 (or referred to as a communication terminal or terminal). The network device 110 may provide communication coverage for a specific geographical area and may communicate with terminal devices positioned within the coverage area.

FIG. 1 exemplarily shows one network device and two terminal devices. Optionally, the communication system 100 may include multiple network devices, each of which may have a coverage area in which other number of terminal devices are included, which is not limited in the embodiments of the present application.

Optionally, the communication system 100 may also include other network entities such as a network controller and a mobility management entity, which is not limited in the embodiments of the present application.

It should be understood that a device having a communication function in a network/system in the embodiments of the present application may be referred to as a communication device. Taking the communication system 100 shown in FIG. 1 as an example, the communication devices may include a network device 110 and a terminal device 120 with the communication function. The network device 110 and the terminal device 120 may be the specific devices described above and will not be repeated here; the communication devices may also include other devices in the communication system 100, such as a network controller, a mobile management entity, and other network entities, which is not limited in the embodiments of the present application.

It should be understood that terms "system" and "network" are often used interchangeably herein. The term "and/or" herein is used to describe an association relationship between associated objects, for example, to indicate that there may be three relationships between the related objects. For example, "A and/or B" may represent: A alone, both A and B, and B alone. In addition, the character "/" herein generally indicates that related objects before and after this character are in an "or" relationship.

It should be understood that the "indicate" mentioned in the embodiments of the present application may mean a direct indication or an indirect indication, or represent that there is an association relationship. For example, A indicating B may mean that A directly indicates B, e.g., that B may be obtained through A; or it may mean that A indirectly indicates B, e.g., that A indicates C, and B may be obtained through C; or it may mean that there is an association relationship between A and B.

In the description of the embodiments of the present application, the term "correspond" may that there is a direct correspondence or indirect correspondence between two elements, or may indicate an association relationship between two elements, or may indicate a relationship of indicating and being indicate, configuring and being configured, etc.

In the embodiments of the present application, "predefined" may be achieved by pre-storing corresponding codes, tables or other methods that may be used to indicate related information in a device (e.g., including a terminal device and a network device). The specific implementation method is not limited in the present application. For example, "predefined" may refer to those defined in a protocol.

In the embodiments of the present application, the "protocol" may refer to a standard protocol in the communication field, for example, it may include an LTE protocol, an NR protocol, and related protocols applied in future communication systems, which is not limited in the present application.

To facilitate understanding of the technical solutions in the embodiments of the present application, the relevant technologies of the present application will be described.

I. Zero-power consumption communication

The key technologies of the zero-power consumption communication include power harvesting, backscatter communication and low-power consumption technology.

As shown in FIG. 2, a typical zero-power consumption communication system (e.g., an RFID system) includes a network device (e.g., a reader in the RFID system) and a zero-power consumption device (e.g., an electronic tag). The network device is used to transmit a wireless power supply signal and a downlink communication signal to the zero-power consumption device, and receive a backscatter signal from the zero-power consumption device. A basic zero-power consumption device includes a power harvesting module, a backscattering module, and a low-power computing module. In addition, the zero-power consumption device may also have a memory or sensor for storing some basic information (e.g., object identifier) or sensing data, e.g., ambient temperature and ambient humidity.

For example, the power harvesting module may harvest power carried by a radio wave (such as the radio wave emitted by the network device shown in FIG. 2) in space to drive the low-power computing module of the zero-power consumption device and realize backscatter communication. After obtaining power, the zero-power consumption device may receive a control command from the network device and transmit data to the network device based on the control signaling in a backscatter manner. The data transmitted may be data stored in the zero-power consumption device (such as an identifier, or pre-written information, e.g., a production date, a brand, and a manufacturer of the product). The zero-power consumption devices may be equipped with various sensors, and may report the data collected by the various sensors based on the zero-power consumption mechanism.

The key technologies in zero-power consumption communication will be described in the following.

1. RF power harvesting

As shown in FIG. 3, the RF power harvesting module harvests electromagnetic wave power in space based on a principle of electromagnetic induction, so as to obtain the power required to drive the zero-power consumption device to work, e.g., for driving a low-power demodulation and modulation module, a sensor, and memory reading. Therefore, the zero-power consumption device does not require conventional batteries.

2. Backscatter (Back scattering) communication

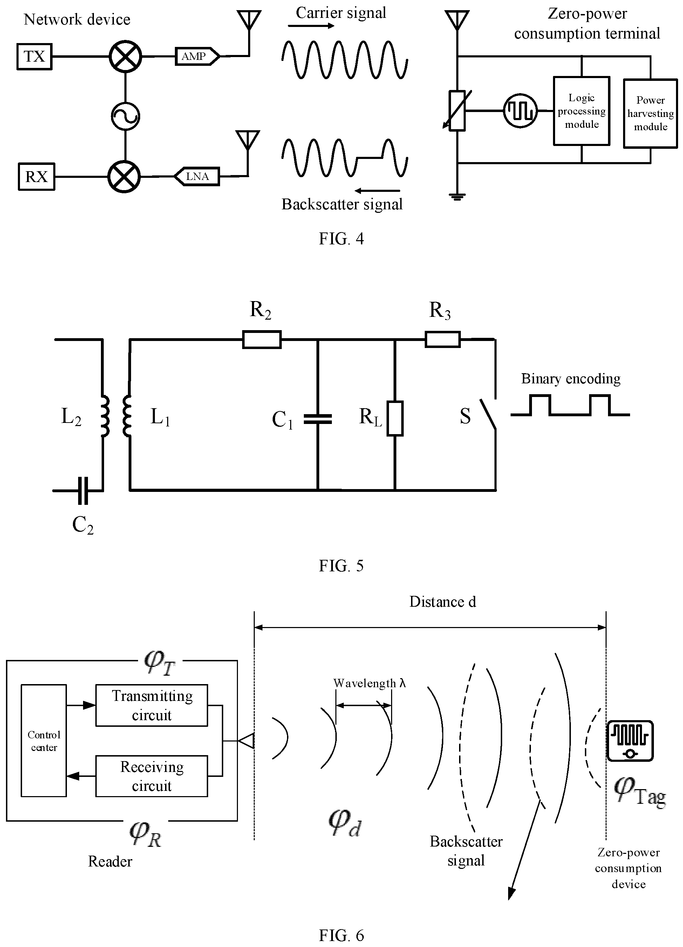

As shown in FIG. 4, the zero-power consumption device receives the carrier signal transmitted by the network device, modulates the carrier signal so as to carry information to be transmitted, and radiates a modulated signal via an antenna. The information transmission process is called backscatter communication. Backscatter and load modulation function are inseparable. During the load modulation, circuit parameters of an oscillation loop of the zero-power consumption device are adjusted and controlled according to the pace of a data stream, so that parameters such as an impedance of the zero-power consumption device are changed accordingly, thereby completing the modulation process. Load modulation technology mainly includes two methods: resistive load modulation and capacitive load modulation. In the resistive load modulation, a resistor is connected in parallel with the load, and is switched on or off based on the control of the binary data stream, as shown in FIG. 5. The on/off of the resistor may cause a voltage of a circuit to change, thus realizing amplitude shift keying (ASK), that is, the modulation and transmission of the signal is achieved by adjusting the amplitude of the backscatter signal of the zero-power consumption device. Similarly, in the capacitive load modulation, a resonant frequency of a circuit may be changed by switching the capacitor on or off, thereby realizing frequency shift keying (FSK), that is, the modulation and transmission of the signal is achieved by adjusting the operating frequency of the backscatter signal of the zero-power consumption device.

It can be seen that the zero-power consumption device uses load modulation to modulate an incoming signal, thereby realizing the backscattering process. Therefore, the zero-power consumption device has following significant advantages:

(1) The zero-power consumption device does not actively transmit signals, so it does not require complex RF links, such as PA, RF filters.
(2) It is unnecessary to actively generate high-frequency signals, so no high-frequency crystal oscillator is required;
(3) With the help of backscatter communication, terminal signal transmission does not need to consume power of the terminal own.

3. Coding technology

The data transmitted by zero-power consumption devices may be represented by binary one ("1") and binary zero ("0") through different forms of codes. In a radio frequency identification system, one of following encoding manners are generally used: non-return-to-zero (NRZ) inverted encoding, Manchester encoding, unipolar return-to-zero encoding, differential bi-phase (DBP) encoding, differential encoding, pulse interval encoding (PIE), bidirectional space encoding (FM0), Miller encoding and differential encoding, etc. Colloquially, different encoding technologies use different pulse signals to represent 0 and 1.

In some scenarios, based on the power source and usage of the zero-power consumption devices, the zero-power consumption devices may be categorized into the following types.

1. Passive zero-power consumption device

The zero-power consumption device (e.g., an electronic tag in an RFID system) does not need a built-in battery. When the zero-power consumption device approaches a network device (such as a reader in an RFID system), the zero-power consumption device is located within a near field formed by radiation of an antenna of the network device. Therefore, the antenna of zero-power consumption device generates an induced current through electromagnetic induction, and the induced current drives a low-power chip circuit of the zero-power consumption terminal. In this way, operations such as demodulating a forward link signal, and modulating a reverse link (or referred to as a reflective link) signal can be implemented. For a backscatter link, the zero-power consumption device uses the backscatter implementation for signal transmission.

It can be seen that the passive zero-power consumption device does not require a built-in battery to drive either the forward link or the reverse link, and is a true zero-power consumption device.

The passive zero-power consumption device does not require a battery, and an RF circuit and baseband circuit thereof are very simple. For example, the passive zero-power consumption terminal does not require a low-noise amplifier (LNA), a power amplifier (PA), a crystal oscillator, an analog-to-digital converter (ADC) or other devices, and therefore has many advantages such as a small size, a light weight, a very low price, and a long service life.

2. Semi-passive zero-power consumption device

The semi-passive zero-power consumption device itself does not have a conventional battery installed thereon, but may use an RF power harvesting module to harvest radio wave power and store the harvested power in a power storage unit (such as a capacitor). After the power storage unit obtains power, the power can be used to drive a low-power chip circuit of the zero-power consumption device, thereby implementing operations such as demodulating a forward link signal, and modulating a reverse link signal.. For a backscatter link, the zero-power consumption device uses the backscatter implementation for signal transmission.

It can be seen that the semi-passive zero-power consumption device does not require a built-in battery to drive either the forward link or the reverse link. Although power stored in the capacitor is used in operation, the power comes from the radio power harvested by the power harvesting module. Therefore, the semi-passive zero-power consumption terminal is also a true zero-power consumption terminal.

The semi-passive zero-power consumption device inherits many advantages of the passive zero-power consumption device, and therefore has many advantages such as a small size, a light weight, a very low price, and a long service life.

3. Active zero-power consumption device

The zero-power consumption device used in some scenarios may also be an active zero-power consumption device, which may have a built-in battery. The battery is used to drive the low-power chip circuit of the zero-power consumption device. In this way, operations such as demodulating a forward link signal, and modulating of a reverse link signal can be implemented. However, for a backscatter link, the zero-power consumption device uses the backscatter implementation for signal transmission. Therefore, the zero-power consumption of such type of devices is mainly embodied in that the signal transmission of the reverse link does not need the terminal's own power, but uses a backscatter manner.

The active zero-power consumption device supplies power to the RFID chip through the built-in battery to increase the reading and writing distance of the tag and improve the reliability of communication. Therefore, the active zero-power consumption device may be applied in some scenarios with relatively high requirements on communication distance, reading delay, etc.

Some zero-power consumption terminals, e.g., semi-passive zero-power consumption terminals or active zero-power consumption terminals, may have an active transmission ability, that is, in addition to performing communication through backscatter, the backward link may also perform communication through active transmission.

II. Cellular passive Internet of Things

As 5G industry applications increase, the types of connected objects and application scenarios are increasing, and there will be higher requirements on the cost and power of communication terminals. The applications of battery-free, low-cost passive Internet of Things devices will become a key technology for cellular Internet of Things, which will enrich the types and number of 5G network-connected terminals and truly realizing interconnection of everything. Passive Internet of Things devices may be based on the zero-power consumption communication technology, e.g., RFID technology, and may be extended on this basis to be applied for cellular Internet of Things.

To facilitate understanding of the embodiments of the present application, power supply signals, scheduling signals and carrier signals related to zero-power consumption communication will be explained.

1. Power supply signal

The power supply signal is the power source from which the zero-power consumption device harvests power.

In terms of carrier of the power supply signal, the carrier may be a base station, a smart phone, a smart gateway, a charging station, a micro base station, or the like.

In terms of frequency band, the frequency band of a radio wave used for power supply may be a low frequency, an intermediate frequency, a high frequency, or the like.

In terms of waveform, the radio wave used for power supply may be a sine wave, a square wave, a triangle wave, a pulse, a rectangular wave, or the like.

In addition, the radio wave used for power supply may be a continuous wave or a non-continuous wave (that is, a certain period of interruption is allowed).

Optionally, the power supply signal may be an existing signal in 3GPP standards, such as a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), or a physical broadcast channel (PBCH). Alternatively, the power supply signal may be a WIFI signal or a Bluetooth signal.

Optionally, the power supply signal may also be implemented by a newly added signal, e.g., a newly added signal dedicated to power supply.

2. Trigger signal, also referred to as scheduling signal

The trigger signal is used to trigger or schedule the zero-power consumption device to transmit data.

In terms of carrier of a trigger signal, the carrier may be a base station, a smart phone, a smart gateway, or the like.

In terms of frequency band, a radio wave used for trigger or scheduling may operate at a low frequency, an intermediate frequency, a high frequency, or the like.

In terms of waveform, the radio wave used for trigger or scheduling may be a sine wave, a square wave, a triangle wave, a pulse, a rectangular wave, or the like.

In addition, the radio wave used for trigger or scheduling may be a continuous wave or a non-continuous wave (that is, a certain period of interruption is allowed).

Optionally, the trigger signal may be an existing signal in 3GPP standards, such as, a SRS, a PUSCH, a PRACH, a PUCCH, a PDCCH, a PDSCH, a PBCH, a WIFI signal, a Bluetooth signal, or the like.

Optionally, the trigger signal may also be implemented by a newly added signal, e.g., a newly added signal dedicated to triggering or scheduling.

3. Carrier signal

The carrier signal is used for the zero-power consumption device to generate a backscatter signal, for example, the zero-power consumption device may modulate a received carrier signal according to the information to be transmitted to form a backscatter signal.

In terms of carrier of a carrier signal, the carrier may be a base station, a smart phone, a smart gateway, or the like.

In terms of frequency band, a radio wave used as a carrier signal may operate at a low frequency, an intermediate frequency, a high frequency, or the like.

In terms of waveform, the radio wave used as a carrier signal may be a sine wave, a square wave, a triangle wave, a pulse, a rectangular wave, or the like.

In addition, the radio wave used as a carrier signal may be a continuous wave or a non-continuous wave (that is, a certain period of interruption is allowed).

Optionally, the carrier signal may be an existing signal in 3GPP standards, such as a SRS, a PUSCH, a PRACH, a PUCCH, a PDCCH, a PDSCH, a PBCH, a WIFI signal, a Bluetooth signal, or the like.

Optionally, the carrier signal may also be implemented by a newly added signal, e.g., a newly added carrier signal dedicated to generating a backscatter signal.

It should be noted that, in the embodiments of the present application, the power supply signal, the scheduling signal and the carrier signal may be the same signal or different signals. For example, the power supply signal may be used as a carrier signal, and the scheduling signal may also be used as a carrier signal.

To facilitate understanding of the embodiments of the present application, the indoor positioning technology related to the present application will be described.

In outdoor environments, mobile terminal positioning can achieve high accuracy thanks to the global positioning system (GPS) system and the independent cellular system. However, in indoor environments and environments with deep shadow effects, satellite signals and cellular signals are vulnerable to interrupt, which makes positioning a problem.

In indoor environments where satellite positioning is unavailable, indoor positioning technology acts as assisted positioning to satellite positioning to solve the problem that, when reaching the ground, satellite signals are too weak to penetrate buildings to position a current location of an object. Indoor positioning refers to the implementation of position positioning in indoor environments, and establishes a set of indoor positioning systems by combining a variety of technologies which mainly including wireless communication, base station positioning, inertial navigation positioning, thereby realizing real-time monitoring of the positions of personnel, objects, and other entities within indoor environments. To facilitate understanding of the embodiments of the present application, an explanation of phase rotation in backscatter will be provided below.

FIG. 6 is a schematic diagram illustrating backscatter communication, in which the reader transmits a radio frequency signal having a frequency of $f$ and a wavelength of $\lambda$ to a zero-power consumption device (e.g., a tag). A distance between the zero-power consumption device and the reader is d. Upon receiving the radio frequency signal transmitted by the reader, the zero-power consumption device may backscatter the signal and transmit a backscatter signal to the reader. The backscatter signal may be modulated to carry the information that the zero-power consumption device intends to transmit; alternatively, the backscatter signal may not be modulated. Generally speaking, due to the circuit design of the reader and the zero-power consumption device, inherent phase offsets/phase rotations are introduced. Generally, the phase difference between the radio frequency signal generated by the reader and the backscatter signal received by the reader may be expressed as: $\varphi = (\varphi_d + \Delta\varphi)\bmod 2\pi$, where $\varphi_d$ is a phase rotation caused by the distance d during signal transmission, $\varphi_d = \dfrac{2\pi}{\lambda}2d$, and $\Delta\varphi$ is a phase rotation caused by the circuits of the reader and zero-power consumption device, i.e., $\Delta\varphi = \varphi_T + \varphi_R + \varphi_{Tag}$.

In some scenarios, the zero-power consumption devices have a simple structure, a low complexity, and a low cost, which can perform communication based on backscatter communication and are expected to be deployed on a large scale and at a high density. High-density and large-scale deployed zero-power consumption devices may serve as anchor devices with known positions, which can support higher-precision positioning, and in particular, significantly improve positioning accuracy in some indoor environments.

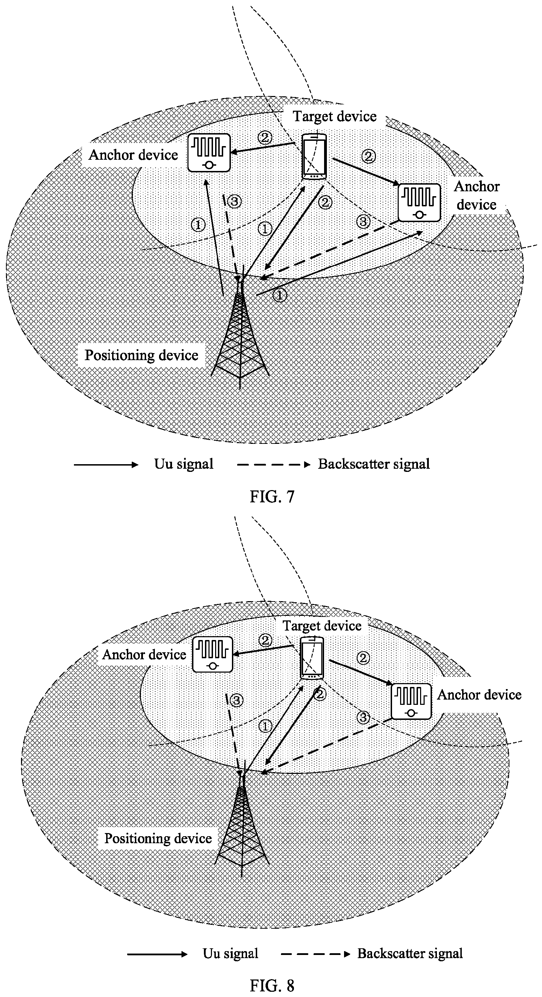

FIGS. 7 to 10 are examples of positioning scenarios to which the embodiments of the present application are applicable. In the scenarios shown in FIGS. 7 to 10, a zero-power consumption device with a known position (or a backscatter device with backscatter capability) is used as an anchor device to assist in positioning.

In Scenario 1, as shown in FIG. 7, an anchor device receives control information from a positioning device, and backscatters a carrier signal transmitted by a target device, so as to assist the positioning device to position the target device.

Scenario 1 involves a positioning system based on three devices including an anchor device, a positioning device, and a target device. The anchor device assists the positioning device to position the target device.

From the perspective of the anchor device, it may receive the control information from the positioning device, and backscatters a carrier signal transmitted by the target device based on the control information from the positioning device. After receiving backscattered information from the anchor device, the positioning device may position the target device by synthesizing a specific positioning method (such as a signal strength-based positioning method, a phase-based positioning method, or a time difference of arrival (TDOA)-based positioning method) and the location information of the anchor device.

In Scenario 2, as shown in FIG. 8, an anchor device backscatters a carrier signal transmitted by a target device, so as to assist the positioning device to position the target device.

Scenario 2 is similar to Scenario 1, and the difference is that the anchor device does not need to receive control information from the positioning device in advance.

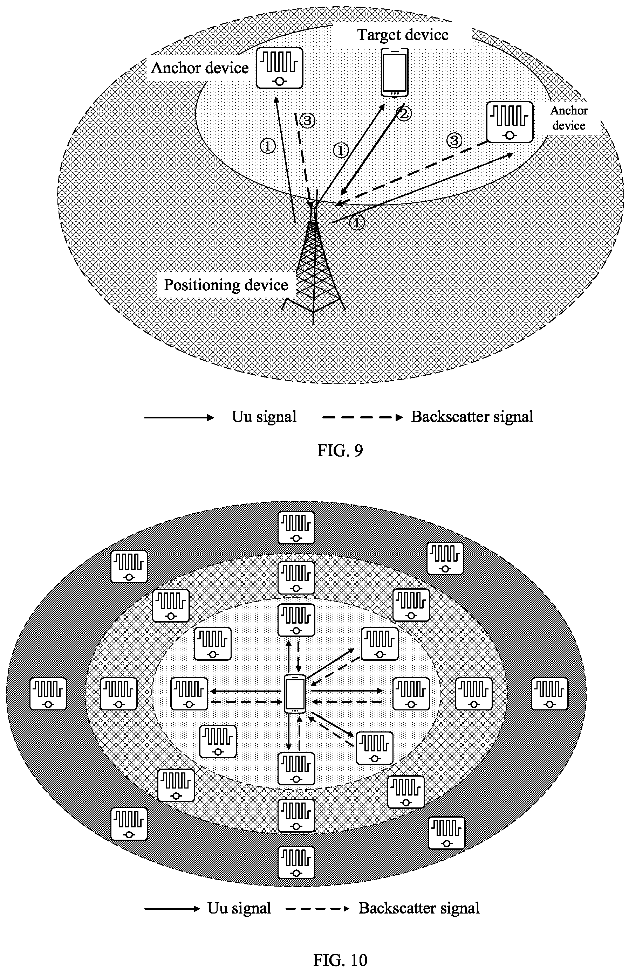

In Scenario 3, as shown in FIG. 9, an anchor device backscatters a carrier signal (which may include control information) transmitted by a positioning device, so as to assist the positioning device to position the target device.

Scenario 3 is different from Scenario 1 and Scenario 2 in that the anchor device backscatters the carrier signal transmitted by the positioning device, and the backscatter process is not associated with the signal from the target device.

In this case, the positioning device also needs to communicate with the target device, and the positioning of the target device is achieved by synthesizing a signal path between the positioning device and the target device, a signal path between the positioning device and the anchor device, and location information of the anchor device.

In Scenario 4, as shown in FIG. 10, an anchor device performs backscatter based on a carrier signal from a target device (which may include control information) to assist the target device to perform positioning.

Scenario 4 is different from scenarios 1 to 3 in that the anchor device directly backscatters the carrier signal from the target device. After receiving the backscatter signal from the anchor device, the target device positions the target device by synthesizing a specific positioning method (such as a signal strength-based positioning method, a phase-based positioning method, or a TDOA-based positioning method) and the location information of the anchor device.

In the applicable scenarios in the embodiments of the present application, the anchor device may be a zero-power consumption device (or in other words, a low-power consumption device) supporting backscatter communication, or may be an intelligent terminal device supporting backscatter communication. The location information of the anchor device is known, that is, the anchor device is a reference device with a fixed location.

In the applicable scenarios in the embodiments of the present application, the target device may be a terminal device mentioned above, and the target device needs to obtain its own location information, that is, achieve self-localization. In the applicable scenarios in the embodiments of the present application, the positioning device may be the subject that implements the positioning algorithm. For example, the positioning device may be a target device, or a third-party device other than the target device and the anchor device, e.g., a network device. Optionally, the positioning device may determine the distance between the target device and the anchor device based on the phase information of the backscatter signal, and further determine the position of the target device according to the location information of the anchor device.

The zero-power consumption devices have characteristics such as low complexity, low cost, maintenance-free and battery-free, may support power harvesting and backscatter communication, and may be used to achieve high-density and large-scale deployment at a lower cost. During deployment, the zero-power consumption devices may be serve as positioning anchor nodes to assist positioning and improve positioning accuracy. For example, cargo positioning in logistics scenarios, animal positioning in livestock farms, low-power positioning of individual users and objects, and indoor positioning in shopping malls, etc.

When a zero-power consumption device performs backscatter, the phase rotation will be introduced due to circuit design, which will affect the positioning accuracy. In addition, in the zero-power consumption communication system, there are various types of zero-power consumption devices. For example, some devices have an power storage ability, while some devices do not have the power storage ability. Therefore, some zero-power consumption devices may directly backscatter an incoming signal, while some zero-power consumption devices need to store power for a period of time before backscattering the incoming signal. Therefore, how to achieve precise positioning through zero-power consumption terminals is an urgent problem that needs to be solved.

To facilitate understanding of the technical solutions of the embodiments of the present application, the technical solutions of the present application will be described in detail below through specific embodiments. The above-mentioned related technologies, as optional solutions, may be arbitrarily combined with the technical solutions of the embodiments of the present application, and these combined solutions all belong to the protection scope of the embodiments of the present application. The embodiments of the present application include at least part of the following contents.

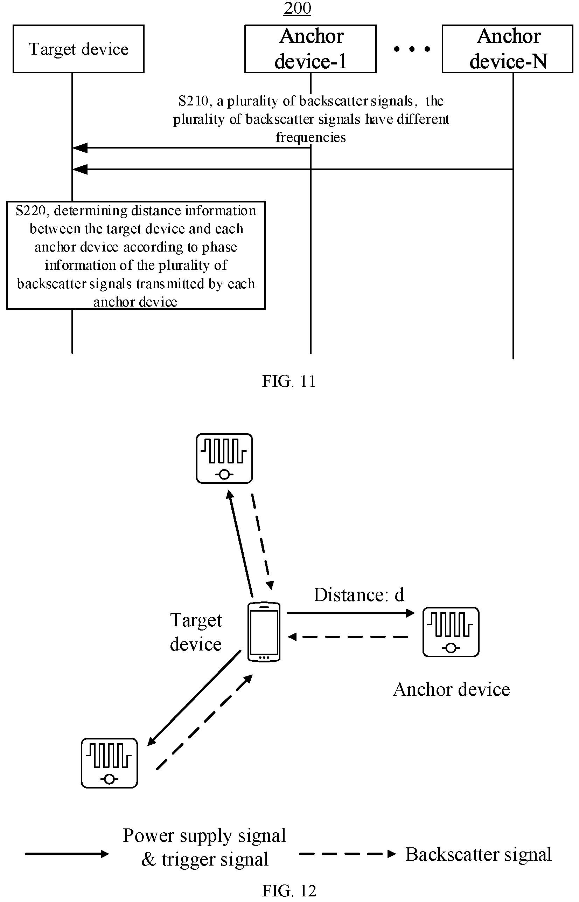

FIG. 11 is a schematic communication diagram of a wireless communication method 200 according to the embodiments of the present application. As shown in FIG. 11, the method 200 includes the following contents.

In S210, a target device receives a plurality of backscatter signals transmitted by each of a plurality of anchor devices, where the plurality of backscatter signals have different frequencies.

In S220, distance information between the target device and each anchor device is determined according to phase information of the plurality of backscatter signals transmitted by each anchor device, where the distance information between the target device and the plurality of anchor devices is used to determine location information of the target device.

In some embodiments, the target device is a device to be positioned, that is, a device being positioned. The target device may be a terminal in a communication system, such as a UE in a cellular system, or a STA in a WIFI system, which is not limited in the present application.

In some embodiments, the anchor device may be a device having backscatter communication capability, and the anchor device is also called a backscatter device.

For example, the anchor device may be a zero-power consumption device, or may be a terminal device with backscatter communication capability.

In some embodiments, the anchor device has a backscatter transmitter that supports backscatter communication.

In some embodiments, the anchor device has a backscatter transmitter and a main transmitter, the backscatter transmitter supports backscatter communication, and the main transmitter supports active transmission communication. That is, the anchor device can not only actively transmit signals, but also transmit backscatter signals through carrier signals.

In some embodiments, the anchor device may obtain power for transmitting backscatter signals through power harvesting.

Optionally, the source from which the anchor device obtains power may be a power supply signal (e.g., a radio frequency signal); alternatively, the anchor device may obtain power from the environment, for example, obtain power by harvesting light energy, radio frequency energy, thermal energy, or vibration energy.

Optionally, the power supply signal may be transmitted by the target device, or may be transmitted by a third-party device, and the third-party device may be a dedicated power supply device or a network device.

In some embodiments, a position of the anchor device is known, or the position of the anchor device is fixed.

In some embodiments, the plurality of anchor devices includes at least three anchor devices.

In some embodiments, the transmission of backscatter signals performed by the anchor device may be event-triggered or command-controlled.

For example, the anchor device may receive a trigger signal (or a control signal) from the target device, and transmit a backscatter signal based on the trigger signal.

In some embodiments, the trigger signal, the power supply signal and the carrier signal may be the same signal or different signals.

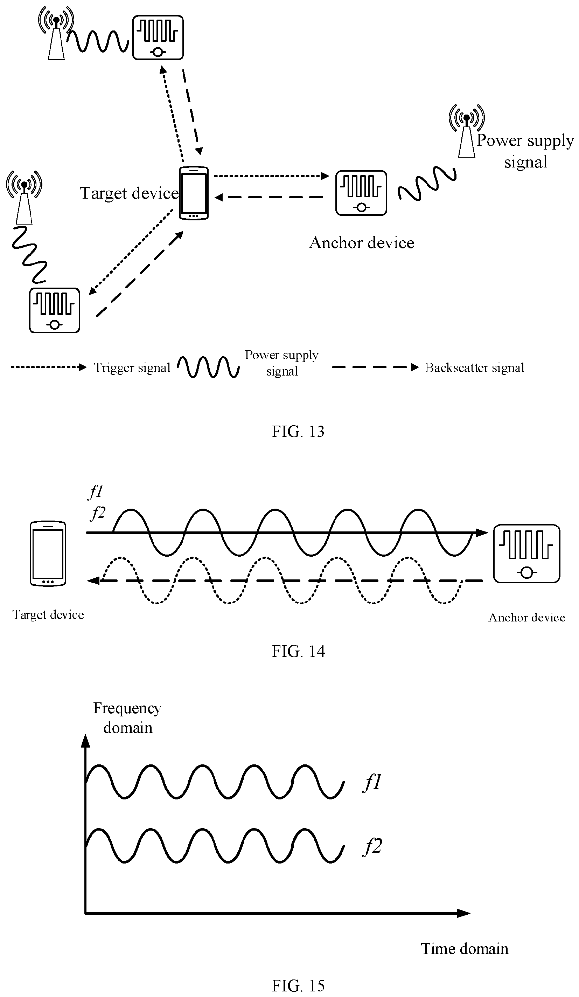

FIGS. 12 and 13 are schematic diagrams of application scenarios to which the embodiments of the present application are applicable.

In the scenario shown in FIG. 12, a signal transmitted by the target device to the anchor device may not only trigger or control the anchor device to perform backscatter, but also provide power to the anchor device. That is, the trigger signal may not only be used as a power supply signal, but also be used as a carrier signal for backscatter communication.

In the scenario shown in FIG. 13, a third-party power supply device may be introduced to provide a power supply signal for the anchor device. Thus, the signal transmitted by the target device to the anchor node may be used to trigger or control the anchor device to perform backscatter. The anchor device may obtain power from the power supply signal, or the anchor device may harvest power in the environment, such as light energy, or thermal energy. The anchor device may obtain power for backscatter communication and then perform backscatter based on the power supply signal from the power supply device; alternatively, the anchor device may perform backscatter based on the trigger signal (control signal) transmitted by the target device; alternatively, the anchor device may actively transmit a communication signal, that is, perform active communication.

In some embodiments, the target device may determine the distance between the target device and the anchor device based on phase information of a plurality of backscatter signals (i.e., at least two backscatter signals having different frequencies). Since the distance will produce phase rotation, there is an association between the distance and the magnitude of phase rotation, that is, the distance between the target device and the anchor device is associated with the phase differences between signals having different frequencies. Therefore, a calculation of the distance between the two may be converted into determining the phase differences between signals having different frequencies. The phase differences between signals having different frequencies may refer to phase differences between the plurality of backscatter signals, or it may refer to phase differences between the plurality of backscatter signals and corresponding carrier signals.

It should be noted that in a case where the target device calculates the distance d based on the phase information of the plurality of backscatter signals, the phase information of the plurality of backscatter signals refers to the phase information of the plurality of backscatter signals received by the target device, i.e., the phase information when the target device receives the plurality of backscatter signals, rather than the phase information when the plurality of backscatter signals are transmitted. In a case where the target device calculates the distance d based on the phase differences between the plurality of backscatter signals and the corresponding carrier signals, the phase differences between the backscatter signals and the corresponding carrier signals refer to the phase differences between the backscatter signals received by the target device and the carrier signals transmitted by the target device.

As shown in FIGS. 12 or 13, in a case where the target device communicates with the anchor device at a distance d, it is assumed that a frequency of the carrier signal transmitted by the target device is $f$ and the speed of light is c, when a signal reaches the target device from the anchor device, a phase rotation of $2\pi f \dfrac{d}{c} \bmod(2\pi)$ is generated. Accordingly, when a signal transmitted from the target device to the anchor device is backscattered to the target device, a phase rotation of $2\pi f \dfrac{2d}{c} \bmod(2\pi)$ is generated. In theory, the target device only needs to measure the phase difference between the transmitted carrier signal and/or the received backscatter signal, the distance between the target device and the anchor device is determined through calculation. However, in actual applications, as shown in FIG. 6, corresponding phase rotation errors will be introduced when the target device transmits and receives signals, and the anchor device will also introduce phase rotation errors. Based on the above method, it is difficult to accurately estimate the distance d between the target device and the anchor device with high precision as these phase rotation errors will affect the positioning accuracy.

Consequently, in the embodiments of the present application, the phase information of a plurality of backscatter signals having different frequencies are employed in positioning. Since the estimation of distance d between the target device and the anchor device based on the phase information of a backscatter signal operating at a single frequency will introduce a certain phase rotation error, phase rotation errors introduced by backscatter signals having different frequencies may be considered to be the same or similar. In a case where the distance d is estimated based on the phase information of a plurality of backscatter signals having different frequencies, the phase difference between two received backscatter signals having different frequencies may be used to estimate the distance d, which is equivalent to cancelling or reducing the phase rotation deviation introduced by the circuit structure or signal processing, and is beneficial to improving the positioning accuracy.

In some embodiments, the target device may determine the distance between the target device and the anchor device through phase characteristics of a one-trip signal or a round-trip signal. Here, the one-trip may refer to a propagation direction from the anchor device to the target device, and the round-trip may refer to a propagation direction from the target device to the anchor device and then from the anchor device to the target device.

For example, the target device may determine the distance between the target device and the anchor device based on the phase differences between signals having different frequencies.

The calculation method of the phase differences between signals having different frequencies will be described below with reference to Method 1 and Method 2.

Method 1: A backscatter signal and a corresponding carrier signal are taken as a group. For each group of backscatter signal and corresponding carrier signal, the target device may individually calculate a round-trip phase difference (i.e., a phase difference between a received backscatter signal and a corresponding transmitted carrier signal), thereby obtaining a plurality of groups of phase differences. Further, the phase differences between signals having different frequencies are then determined based on the plurality of groups of phase differences.

Method 2: The received backscatter signals having different frequencies are processed with, e.g., conjugate correlation processing, to obtain the phase differences between the backscatter signals having different frequencies, that is, the phase differences between the received signals having different frequencies.

In an example where two backscatter signals with different frequencies (which are $f_1$ and $f_2$ respectively) are taken as a plurality of backscatter signals, if only the phase difference generated in one-trip d is considered, the phase difference between two received backscatter signals with different frequencies is

$$\Delta\varphi_1=2\pi(f_1-f_2)\frac{d}{c}\mathrm{mod}(2\pi)$$ . Therefore, one-trip dis-

tance $$\mathrm{d}=\frac{c\cdot\Delta\varphi_1}{2\pi\cdot\Delta f}\mathrm{mod}(\frac{c}{\Delta f})$$ may be obtained through the phase difference between the two signals having different frequencies and the corresponding frequency values. Correspondingly, if a phase difference

$$\Delta\varphi_2=2\pi(f_1-f_2)\frac{2d}{c}\mathrm{mod}(2\pi)$$ based on a round-trip signal is employed in calculation, the distance from the target device to the anchor device is

$$\mathrm{d}=\frac{c\cdot\Delta\varphi_2}{4\pi\cdot\Delta f}\mathrm{mod}(\frac{c}{2\Delta f})$$ .

In some embodiments, in a case where positioning is performed based on phase information of a plurality of backscatter signals, there is an association between the supported positioning distance and the frequency differences between the plurality of backscatter signals. For example, in a case where positioning is performed based on two backscatter signals, the smaller the frequency difference between the two backscatter signals, the larger the supported positioning distance. Therefore, the to-be-used frequency difference between the backscatter signals may be determined according to the target scenario or the maximum positioning distance. For example, in a case where positioning within a maximum range of 300 meters is supported, the frequency difference Δf needs to be less than 1 MHz.

It should be understood that the method for generating the plurality of signals having different frequencies used for positioning is not limited in the present application. For example, they may be generated by a target device, an anchor device, or a third-party device, which is not limited in the present application.

A method for generating a plurality of backscatter signals having different frequencies will be described below through specific embodiments.

Embodiment 1: the plurality of backscatter signals are obtained by backscattering a plurality of carrier signals, and the plurality of carrier signals have different frequencies. That is to say, the difference of the plurality of backscatter signals in frequency is due to the difference of the carrier signals in frequency, as shown in FIG. 14.

In Embodiment 1, the carrier signals and the backscatter signals may be in a one-to-one correspondence, and a carrier signal and a corresponding backscatter signal may be considered as a group of signals, and carrier signals in different groups have different frequencies, and the backscatter signals in different groups have different frequencies.

In some embodiments, the plurality of carrier signals are transmitted by the target device, or a third-party device which may be a dedicated carrier transmitting device, or a network device. The position of the third-party device may be known.

In some embodiments, in a case where positioning is performed based on the phase information of a plurality of backscatter signals, there is an association between the supported positioning distance and the frequency differences between the plurality of backscatter signals. For example, in a case where positioning is performed based on two backscatter signals, the smaller the frequency difference between the two backscatter signals, the larger the supported positioning distance . Therefore, the to-be-used frequency difference between the backscatter signals may be determined according to the target scenario or the maximum positioning distance. For example, in a case where positioning within a maximum range of 300 meters is supported, the frequency difference Δf needs to be less than 1 MHz.

Optionally, in Embodiment 1, a frequency difference between every two backscatter signals of the plurality of backscatter signals is less than or equal to a first threshold, and the first threshold is associated with the maximum positioning distance.

Optionally, in Embodiment 1, a frequency difference between every two carrier signals of the plurality of carrier signals is less than or equal to the first threshold, and the first threshold is associated with the maximum positioning distance.

Optionally, the first threshold may be predefined, configured by the network device, or configured by the target device.

In some embodiments, as shown in FIG. 15, the plurality of carrier signals are transmitted simultaneously.

In this case, when the target device receives the backscatter signals corresponding to the plurality of carrier signals, the target device may obtain phase differences between the round-trip transmitting signals having different frequencies and the corresponding received signals, and further determine the distance d between the target device and the anchor device based on frequencies of a plurality of received backscatter signals.

Optionally, initial phases of the plurality of carrier signals are the same. In this case, the target device may calculate the phase differences between signals having different frequencies based on the aforementioned Method 1 or Method 2.

Optionally, the plurality of carrier signals have different initial phases. In this case, the target device may directly calculate the phase differences between signals having different frequencies based on the aforementioned Method 1. In a case where the phase differences are calculated based on the aforementioned Method 2, initial phase differences needs to be subtracted from the phase differences.

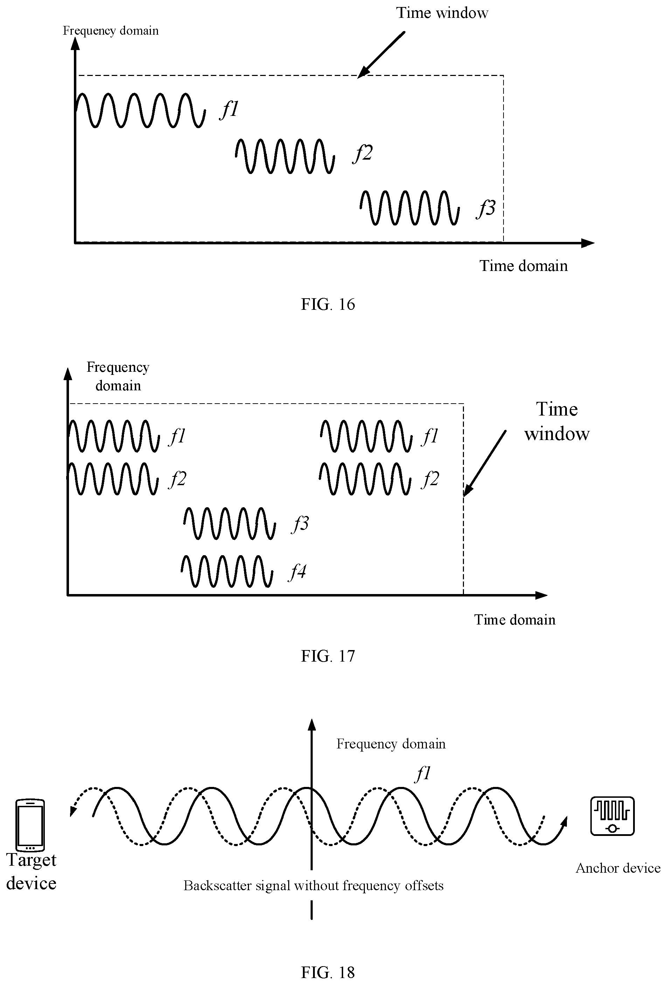

In some embodiments, as shown in FIG. 16, the plurality of carrier signals are transmitted in a time division mode.

For example, the target device may transmit carrier signals having different frequencies in different time units, further receive and process the backscatter signals in different time units to obtain the round-trip phase differences of each of the plurality of groups of signals (that is, the phase differences between each received backscatter signal and a transmitted carrier signal), and then determine the distance d between the target device and the anchor device according to the frequencies of the plurality of groups of signals and the phase differences between the plurality of groups of signals.

In some embodiments, if the plurality of backscatter signals received include at least three backscatter signals, the target device determines a plurality of distances between the target device and the anchor device based on a phase difference between every two backscatter signals of the at least three backscatter signals. For example, the plurality of distances between the target device and the anchor device are determined based on the phase difference between every two backscatter signals and the frequencies of every two backscatter signals.

Further, the target distance between the target device and the anchor device is determined according to the plurality of distances between the target device and the anchor device. For example, the plurality of distances are averaged to obtain the target distance d.

As an example, the plurality of backscatter signals include backscatter signal 1, backscatter signal 2 and backscatter signal 3, then the target device may calculate a phase difference 12 between the backscatter signal 1 and the backscatter signal 2, a phase difference 23 between the backscatter signal 2 and the backscatter signal 3, and a phase difference 31 between the backscatter signal 3 and the backscatter signal 1. Further, based on the phase difference 12, in combination with frequencies of the backscatter signal 1 and backscatter signal 2, a distance d1 is determined; based on the phase difference 23, in combination with frequencies of the backscatter signal 2 and backscatter signal 3, a distance d2 is determined; and based on the phase difference 31, in combination with frequencies of the backscatter signal 3 and backscatter signal 1, a distance d3 is determined. The target distance d is determined according to the distances d1, d2 and d3. For example, the target distance d is obtained by averaging d1, d2 and d3.

In some other embodiments, if the plurality of backscatter signals include at least three backscatter signals, the target device determines a plurality of distances between the target device and the anchor device based on phase differences between every two backscatter signals of the at least three backscatter signals and the corresponding carrier signals, and further determines the target distance between the target device and the anchor device based on the plurality of distances between the target device and the anchor device. For example, the target distance d is obtained by averaging the plurality of distances.

As an example, the plurality of backscatter signals include backscatter signal 1, backscatter signal 2 and backscatter signal 3, and the corresponding carrier signals are carrier signal 1, carrier signal 2 and carrier signal 3, respectively. The target device may calculate phase difference 1 between backscatter signal 1 and carrier signal 1, phase difference 2 between backscatter signal 2 and carrier signal 2, and phase difference 3 between backscatter signal 3 and carrier signal 3. Further, based on phase difference 1 and phase difference 2, in combination with the frequencies of backscatter signal 1 and backscatter signal 2, distance d1 is determined; based on phase difference 1 and phase difference 3, in combination with the frequencies of backscatter signal 1 and backscatter signal 3, distance d2 is determined; based on phase difference 2 and phase difference 3, in combination with the frequencies of backscatter signal 2 and backscatter signal 3, distance d3 is determined. Then, the target distance d is determined according to distances d1, d2 and d3. For example, the target distance d is obtained by averaging d1, d2 and d3.

In some embodiments, the plurality of carrier signals are transmitted in a hybrid approach that integrates the two aforementioned methods.

For example, the plurality of carrier signals are categorized into a plurality of groups, each group includes multiple carrier signals, multiple carrier signals in one group are transmitted simultaneously, and carrier signals in different groups are transmitted in a time division mode, as shown in FIG. 17.

It should be understood that the carrier signals in different groups may have the same or different frequencies. That is, in a case where the plurality of carrier signals are transmitted in multiple transmission rounds, the same frequency combination may be used, or different frequency combinations may be used.

In some embodiments, in a case where the plurality of carrier signals are transmitted in a time division mode, transmission of the plurality of carrier signals is completed within a first time window, which is conducive to reducing the impact of channel changes.

In some embodiments, the length of the first time window is predefined, or determined by the target device.

In some embodiments, the frequencies of the plurality of backscatter signals are the same as the frequencies of the corresponding carrier signals, as shown in FIG. 18.

That is, when performing backscatter, the anchor device may perform backscatter based on a frequency of a carrier signal.

Optionally, for an anchor device without a frequency shifting capability, the anchor device may not perform frequency shifting to the carrier signals.

Optionally, for an anchor device with the frequency shifting capability, the anchor device may not perform frequency shifting to the carrier signal.

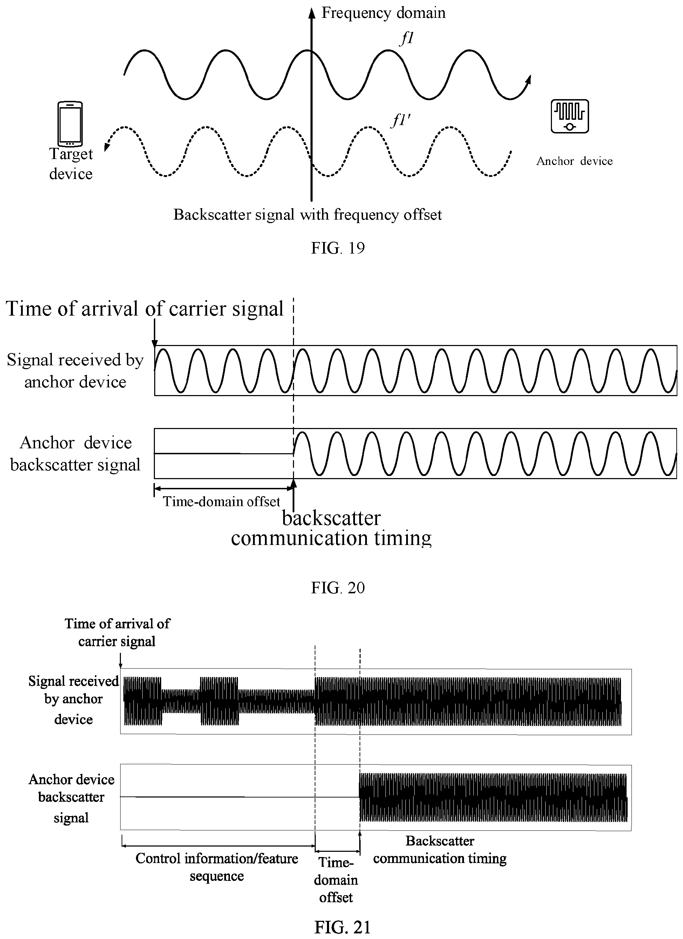

In some other embodiments, there are frequency-domain offsets (or frequency offsets) between the frequencies of the plurality of backscatter signals and the frequencies of the corresponding carrier signals, as shown in FIG. 19.

That is to say, the anchor device may perform frequency shifting to the frequencies of the carrier signals when performing backscatter.

Optionally, for an anchor device with a frequency-domain shifting capability, the anchor device may perform frequency shifting to the carrier signals.

In some embodiments, the frequency-domain offsets are predefined, or determined by the anchor device that transmits the plurality of backscatter signals, or associated with the anchor device, or configured or indicated by the target device, or configured or indicated by a network device.

It should be understood that the unit of a frequency-domain offset is not limited in the present application, for example, it may be an absolute frequency domain unit, such as Hz, kHz, or it may be a relative frequency domain unit, such as a subcarrier.

Optionally, the plurality of backscatter signals may correspond to the same frequency-domain shifting value or different frequency-domain shifting values, as long as the frequencies of the plurality of shifted backscatter signals are different, which is not limited in the present application.

Optionally, different anchor devices may use the same frequency-domain shifting value or different frequency-domain shifting values to perform frequency shifting.

It should be understood that the plurality of anchor devices may use the same approach or different approaches to perform frequency-domain shifting on backscatter signals.

For example, the plurality of anchor devices skip performing frequency shifting on carrier signals, or all perform frequency shifting on carrier signals; or some anchor devices perform frequency shifting on carrier signals, and other anchor devices skip performing frequency shifting on carrier signals.

It should be noted that frequency-domain shifting control is frequency-domain shifting control on signals at the anchor device side. Therefore, a backscatter signal involved in the relevant implementations refers to a transmitted backscatter signal, and a carrier signal refers to a received carrier signal.

In some embodiments, in a case where a frequency of a backscatter signal and a frequency of a carrier signal are the same, the target device may determine a round-trip phase difference based on the carrier signal and the backscatter signal having the same frequency.

In some embodiments, a frequency offset between a backscatter signal and a carrier signal enables the target device to achieve frequency-domain isolation between a transmitting signal and a received signal, thereby reducing interference between signals.

In some embodiments, the anchor device may adopt a fixed frequency shifting processing approach, or in other words, whether the anchor device performs frequency shifting on the carrier signals to obtain the backscatter signals is predefined.

For example, the anchor device may not perform frequency shifting on a frequency of a carrier signal by default, that is, the anchor device performs backscatter based on an original frequency of the carrier signal.

In another example, the anchor device may perform frequency shifting on a frequency of a carrier signal by default, that is, the anchor device always performs frequency shifting on t carrier signals and performs backscatter based on the shifted frequency.

In some embodiments, the anchor device adopts a corresponding frequency shifting processing approach according to whether it has a frequency shifting capability.

For example, for an anchor device without the frequency shifting capability, the anchor device does not perform frequency shifting on carrier signals by default.

In another example, for an anchor device with the frequency shifting capability, the anchor device may not perform frequency shifting on carrier signals by default, or perform frequency shifting on carrier signals by default.

In some embodiments, the anchor device may adopt a control-based (or configuration-based, or indication-based) frequency shifting processing approach, or in other words, whether the anchor device performs frequency shifting on a carrier signal to obtain a backscatter signal is control-based (or configuration-based, or indication-based). For example, whether the anchor device performs frequency shifting on a carrier signal to obtain a backscatter signal is configured by the target device or network device.

For example, for an anchor device with the frequency shifting capability, the anchor device may perform frequency shifting on carrier signals based on the configuration.

It should be understood that the specific way of indicating frequency shifting processing approach to anchor devices is not limited in the present application. For example, the indication may be implemented in an explicit way, or in an implicit way.

For example, the target device may transmit a first indication message to an anchor device, and the first indication message is used to indicate whether to enable or disable frequency shifting, or used to indicate a way to perform backscatter communication or a frequency shifting processing approach, such as performing backscatter based on an original frequency of a carrier signal or before performing backscatter performing frequency shifting on a frequency of a carrier signal first. Optionally, in a case where the anchor device does not receive indication information transmitted by the target device, the anchor device is implicitly indicated not to perform frequency shifting, or in other words, to disable frequency shifting.

In some embodiments, a signal processing method (e.g., a modulation scheme, an encoding method, a code rate) of a backscatter signal is related to the frequency shifting processing approach. For example, different modulation schemes correspond to different frequency-domain shifting processing approaches. For example, OOK modulation is associated with a way of backscattering at an original frequency of a carrier signal, and FSK modulation is associated with a way of first applying frequency shifting on a carrier signal before backscattering at a frequency of the carrier signal. Therefore, in a case where the target device indicates the anchor device to employ the OOK modulation, the anchor device is implicitly indicated to perform backscatter based on an original frequency of a carrier signal. In a case where the target device indicates the anchor device to employ the FSK modulation, the anchor device is implicitly indicated to perform frequency shifting on a frequency of a carrier signal before performing backscatter.

In some other embodiments, in a case where the target device indicates information related to frequency-domain shifting, the anchor device is implicitly indicated to perform frequency shifting on a frequency of a carrier signal before performing backscatter. In a case where the target device does not indicate information related to frequency-domain shifting to an anchor device, the anchor device is implicitly indicated to perform backscatter based on an original frequency of a carrier signal.

Optionally, the information related to frequency-domain shifting may be a specific frequency-domain shifting value or a relative frequency-domain shifting unit, such as an offset of x subcarriers, or may be an index value of a target frequency-domain offset of a plurality of frequency-domain offsets. Optionally, the plurality of frequency-domain offsets may be predefined, configured by the target device, or supported frequency-domain offsets reported by an anchor device, or configured by the network device.

In some embodiments of the present application, time-domain shifting control may be introduced into backscattering process of the anchor device. That is, when receiving a carrier signal, the anchor device does not immediately perform backscatter, but applies a certain time-domain offset on the carrier signal before performing backscatter. The introduction of time-domain shifting control enables robust compatibility with different processing time of different anchor devices on control information, and is conducive to determining the transmitting signal and receiving signal required to calculate the phase difference. That is, the target device may determine, according to the time-domain offset, to use the transmitting signal (i.e., the carrier signal) in which time unit to calculate the phase difference. In other words, there are time-domain offsets between the plurality of backscatter signals transmitted by the anchor device and the plurality of carrier signals received by the anchor device, as shown in FIG. 20.

It should be noted that the time-domain shifting control is time-domain shifting control on signals at the anchor device side. Therefore, a backscatter signal involved in the relevant implementations refers to a transmitted backscatter signal, and a carrier signal refers to a received carrier signal.

In some embodiments, the unit for performing time-domain shifting may be a relative time unit, such as orthogonal frequency-division multiplexing (OFDM) symbols, slots, subframes, frames, backscatter communication time units; or may be an absolute time unit, such as microsecond ($\mu$s), millisecond (ms), or second (s).

In some scenarios, there are many radio frequency signals in the surrounding environment of an anchor device. To enhance anchor devices' capabilities in positioning, it is necessary to perform relevant control on backscatter operation of the anchor device, which includes but is not limited to: encoding and modulation algorithm control, frequency shifting control, time-domain shifting control, frame structure indication. Therefore, the anchor devices need to receive and process these control information, and further perform backscatter according to the indication of the control information, which may cause a certain processing delay and further introduce unknown phase rotation.

In some embodiments, if the target device knows the time-domain offsets between the plurality of backscatter signals and the corresponding carrier signals, and then the phase rotation introduced by the time-domain offsets is also known. In this way, when the target device calculates the distance between the plurality of backscatter signals and the corresponding carrier signals, the phase rotation may be removed. For example, when the target device calculates the distance d according to the phase difference between a received backscatter signal and a transmitted carrier signal, the carrier signal and the backscatter signal need to be in a correspondence, that is, the backscatter signal is obtained by backscattering the carrier signal. Therefore, in some embodiments, the target device may determine a second time unit based on the first time unit and the time-domain offsets. The first time unit is a time unit where the received backscatter signal is located, and the second time unit is a time unit where the carrier signal corresponding to the backscatter signal is located. Furthermore, the phase difference is calculated based on the backscatter signal in the first time unit and the carrier signal in the second time unit.

In some embodiments, a time-domain offset is predefined, e.g., a fixed time offset defined by a protocol, and all anchor devices perform backscatter communication based on the time-domain offset.

In some embodiments, a time-domain offset is determined by an anchor device. For example, the time required for different anchor devices to process control information are different, and the corresponding time-domain offset may be determined based on a processing capability of each anchor device.

In some embodiments, a time-domain offset is configured by the target device. For example, the target device may directly indicate a specific time-domain shifting value (in units as described above). Alternatively, the target device may indicate an index value of a target time-domain offset of a plurality of time-domain offsets. Optionally, the plurality of time-domain offsets may be predefined, configured by the target device, or supported time-domain offsets reported by the anchor device, or configured by the network device.

Optionally, the plurality of backscatter signals may correspond to the same time-domain shifting value or different time-domain shifting values.

Optionally, different anchor devices may use the same time-domain shifting value or different time-domain shifting values to transmit backscatter signals.

In some embodiments, the length of a time-domain offset is equal to a time interval between a time-domain position where the anchor device receives a carrier signal and a time-domain position where the anchor device starts to transmit a backscatter signal, as shown in FIG. 20.

In some other embodiments, the length of a time-domain offset is equal to a time interval between a time-domain position at which the anchor device receives control information or a feature sequence carried in a carrier signal and a time-domain position at which the anchor device starts to transmit a backscatter signal, as shown in FIG. 21.

Optionally, the time-domain position to receive the control information or feature sequence carried in the carrier signal may be the start position to receive the control information or feature sequence carried in the carrier signal, or the ending position to receive the control information or feature sequence carried in the carrier signal.

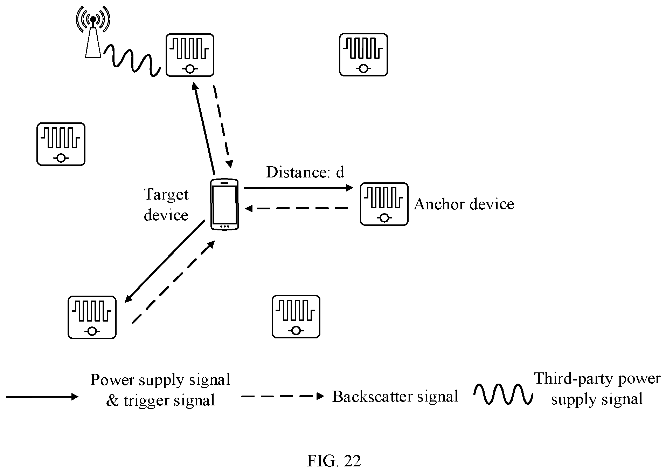

In some embodiments, the plurality of carrier signals are transmitted in a broadcast or multicast manner, as shown in FIG. 22.

In this case, the backscatter signal transmitted by the anchor device need to carry first information, and the first information is used to determine the location information of the anchor device.

It should be understood that in the example shown in FIG. 22, a trigger signal transmitted by the target device may be used as a carrier signal, and anchor devices may get power from the trigger signal or from a third-party device. That is, the target device transmits a plurality of carrier signals to a plurality of anchor devices simultaneously. Furthermore, the plurality of anchor devices all perform backscatter based on the plurality of carrier signals to obtain a plurality of backscatter signals.

For example, the plurality of anchor devices transmit their respective multiple backscatter signals using the same frequency offset and/or time-domain offset.

In another example, each of the plurality of anchor devices transmits corresponding multiple backscatter signals using the corresponding frequency offset and/or time-domain offset.

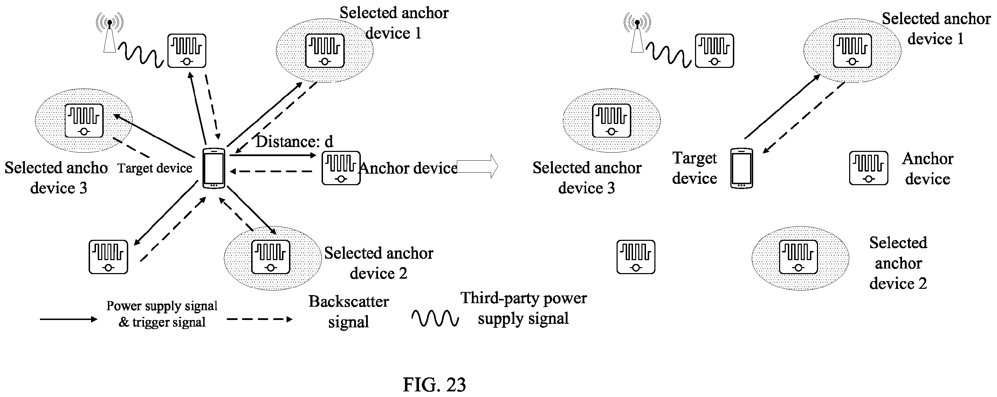

In some embodiments, the plurality of carrier signals are transmitted in a unicast manner, as shown in FIG. 23.

For example, the target device transmits a plurality of carrier signals to each anchor device in a point-to-point communication manner.

In a specific example, the target device may transmit a plurality of carrier signals to each of the plurality of anchor devices in sequence in a time division mode.

In some embodiments, the plurality of anchor devices may be scheduled by the target device.

For example, as shown in FIG. 23, the target device may first identify the surrounding anchor devices, determine the surrounding anchor devices, select a plurality of anchor devices from the surrounding anchor devices, and communicate with the plurality of anchor devices in a point-to-point manner through scheduling, and further determine the distance between the target device and an anchor device based on phase information of backscatter signals.

When identifying the surrounding anchor devices, the target device may first transmit control information to the surrounding anchor devices, and the surrounding anchor devices will perform backscatter. Backscatter signals carry the first information, and the first information is used to determine the location information of the anchor devices. The target device may select at least three anchor devices from the plurality of anchor devices for assisted positioning. For example, at least three anchor devices with the best signal quality are selected.

It should be understood that, in the example shown in FIG. 23, a trigger signal transmitted by the target device may be used as a carrier signal, and anchor devices may get power from the trigger signal or a third-party device.

In some embodiments, a backscatter signal includes a first portion and/or a second portion. The first portion is used to carry first information, and the first information is used to determine the location of the anchor device that transmits the backscatter signal. The second portion is used by the target device to determine the phase information of the backscatter signal.

In some embodiments, the first information includes identification information of the anchor device that transmits the backscatter signal and/or location information of the anchor device. The identification information of the anchor device carried in the backscatter signal transmitted by the anchor device may be used by the target device to identify the anchor device.

In some embodiments, the second portion is used by the target device to identify the phase of the backscatter signal. For example, the second portion may be a specific sequence, such as an all-ones sequence. By transmitting the specific sequence through the backscatter signal, the target device may identify the phase of the backscatter signal through detecting the specific sequence.

In some embodiments, the first portion is earlier than the second portion, or the second portion signal is earlier than the first portion signal. That is to say, the anchor device may first transmit the portion for determining the position of the anchor device, or may first transmit the portion for determining the phase information of the backscatter signal.

In some embodiments, a guard interval is present between the first portion and the second portion.

Optionally, the duration of the guard interval may be predefined, or determined by the anchor device, e.g., related to the anchor device, or configured by the target device, or configured by the network device.

In the embodiments of the present application, a backscatter signal is designed to includes the first portion and the second portion, which is conducive to avoiding the impact on positioning performance during transmission of modulated information, and also enables the target device to identify the anchor device corresponding to the backscatter signal.

In some embodiments, durations of the first portion, second portion and guard interval are predefined.

In some embodiments, durations of the first portion, second portion and guard interval are configured.

In some embodiments, there is an association between the duration of the first portion, the duration of the second portion and the duration of the guard interval. For example, the durations of the first portion, second portion and guard interval have a proportional relationship, or the duration of one of the three may be used to deduce the durations of the other two parts. For example, the duration of the guard interval and the duration of the second portion may be associated with the duration of the first portion, and after the duration of the first portion is determined, the duration of the guard interval and the duration of the second portion may be determined.

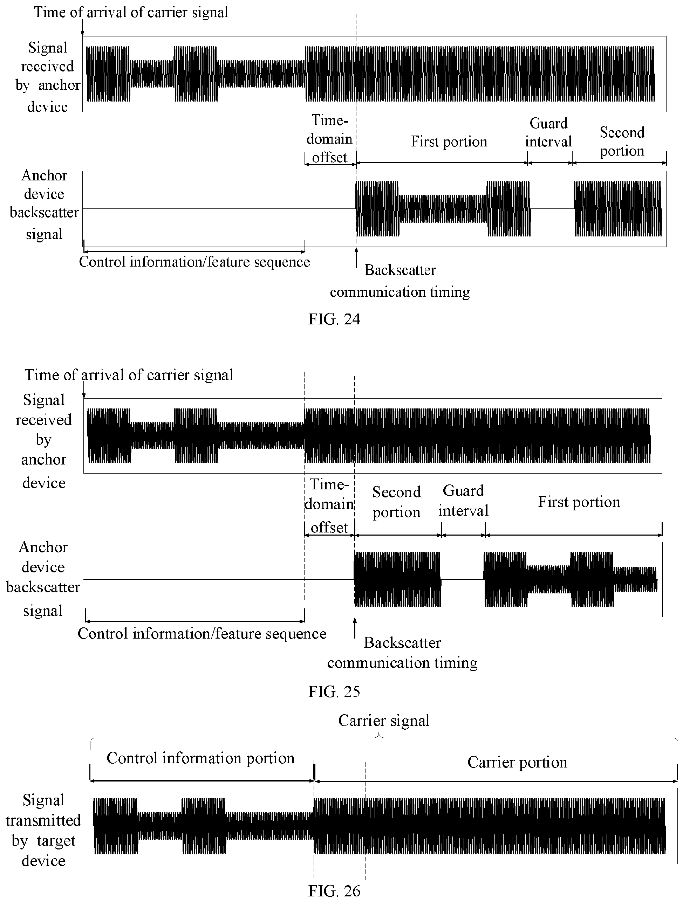

FIG. 24 is a schematic diagram of an information structure defined for backscatter signals according to the embodiments of the present application. In the example shown in FIG. 24, a backscatter signal may include the first portion and the second portion, the first portion is earlier than the second portion, and there is a guard interval between the first portion and the second portion.

FIG. 25 is a schematic diagram of another information structure defined for backscatter signals according to the embodiments of the present application. In the example shown in FIG. 25, a backscatter signal may include the first portion and the second portion, the second portion is earlier than the first portion, and a guard interval is present between the first portion and the second portion.

In some embodiments of the present application, the method 200 further includes: transmitting, by the target device, control information to the plurality of anchor devices, where the control information is used to control a transmitting manner of the plurality of backscatter signals.

In some embodiments, in a case where the target device determines the distances between the target device and the plurality of anchor devices based on a plurality of backscatter signals transmitted by the plurality of anchor devices, the target device may coordinate and control the backscatter communication process of the plurality of anchor devices through the control information.

In some embodiments, the control information is used to indicate at least one of: identification information of the anchor device that transmits the plurality of backscatter signals;

> a frequency-domain offset used by the anchor device to transmit a backscatter signal;
> a time-domain offset used by the anchor device to transmit a backscatter signal;
> a signal processing method used by the anchor device to transmit a backscatter signal; or
> an information structure defined for backscatter signals.

In some embodiments, the identification information of the anchor device included in the control information is used to indicate a target anchor device that transmits the backscatter signal and is scheduled by the target device.

In some embodiments, the frequency-domain offset included in the control information is used to indicate the frequency offset used by the anchor device to transmit the backscatter signal. Optionally, the frequency-domain offset may be common to all anchor devices, i.e., all anchor devices use the same frequency-domain offset. Alternatively, the frequency-domain offset may be per-anchor device configured, i.e., each anchor device corresponds to its own frequency-domain offset.

Optionally, in a case where the control information does not indicate a frequency-domain offset, the anchor device may use a default frequency-domain offset (or a predefined frequency-domain offset) to transmit the backscatter signal.

In some embodiments, the time-domain offset included in the control information is used to indicate the time-domain offset used by the anchor device to transmit the backscatter signals. Optionally, the time-domain offset may be common to all anchor devices, i.e., all anchor devices use the same time-domain offset. Alternatively, the time-domain offset may be per-anchor device configured, i.e., each anchor device corresponds to its own time-domain offset.

Optionally, in a case where the control information does not indicate a time-domain offset, the anchor device may use a default time-domain offset (or a predefined time-domain offset) to transmit the backscatter signals.

In some embodiments, a signal processing method of the backscatter signal may include but is not limited to: a code rate, an encoding method, a modulation scheme, a duration unit of a symbol, etc.

In some embodiments, in a case where there are multiple information structures are defined for backscatter signals (e.g., the information structures shown in FIGS. 24 and 25), the control information may specify the target information structure to be adopted by anchor devices for transmitting backscatter signals. In a case where there is only one information structure defined for backscatter signals (e.g., the information structure shown in FIG. 24 or 25), the control information need not to indicate the information structure for anchor devices' backscatter signal transmission.

Optionally, in a case where there are multiple information structures defined for backscatter signals (e.g., the information structures shown in FIGS. 24 and 25), but the control information does not indicate the target information structure, a default information structure (e.g., the information structure shown in FIG. 24 or 25) may be applied to the control information for transmission of the backscatter signals. For example, if an anchor device needs to transmit the first information, the information structures of backscatter signals that are available to the anchor device may include the first portion. Alternatively, if the anchor device does not need to transmit the first information, the information structures of backscatter signals that are available to the anchor device may only include the second portion and does not include the first portion.

In some embodiments, the control information is transmitted during the positioning process, for example, the control information is transmitted to an anchor device by carrying it in a carrier signal transmitted by the target device. For example, as shown in FIG. 26, the target device may transmit a carrier signal to the anchor device, and the carrier signal may carry a control information portion and a carrier portion used by the anchor device for performing backscatter.

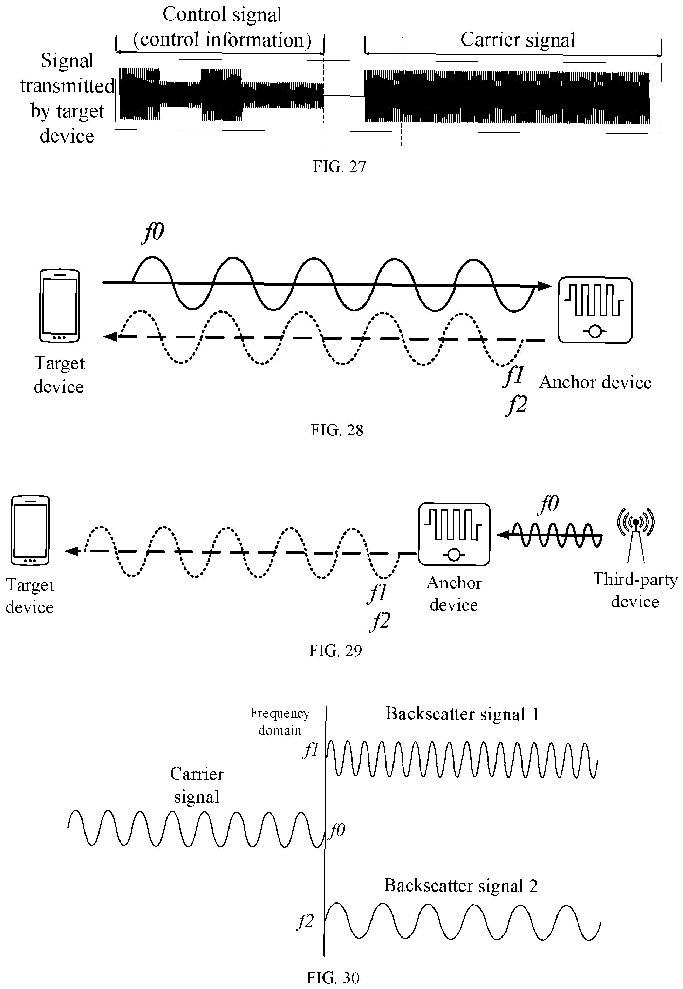

In some other embodiments, the control information is transmitted before the positioning process. For example, the control information is transmitted before the target device transmits a carrier signal. For example, as shown in FIG. 27, before the positioning process, the target device may transmit a control signal to the anchor device, and the control signal may carry control information used to control a transmitting manner in which the anchor device transmits backscatter signals. Furthermore, during the positioning process, the target device may transmit the carrier signal to the anchor device for the anchor device to perform backscatter.

Embodiment 2: the plurality of backscatter signals include a plurality of first backscatter signals, and the plurality of first backscatter signals have different frequencies. The plurality of first backscatter signals are obtained by performing backscatter after a first carrier signal is shifted with different frequency offsets.

That is to say, in Embodiment 2, when performing backscatter communication, the anchor device may obtain a plurality of backscatter signals having different frequencies through frequency-domain shifting. For example, the first carrier signal may be passed through a mixer to obtain output signals having different frequencies, or may be modulated by FSK modulation to obtain output signals having different frequencies.

Optionally, in Embodiment 2, a frequency difference between every two first backscatter signals of the plurality of first backscatter signals is less than or equal to a first threshold, and the first threshold is associated with a maximum positioning distance.

Optionally, the first threshold may be predefined, configured by the network device, or configured by the target device.

In some embodiments, the first carrier signal is transmitted by the target device, as shown in FIG. 28, or transmitted by a third-party device, as shown in FIG. 29. The third-party device may be a dedicated carrier transmitting device, or a network device, etc.

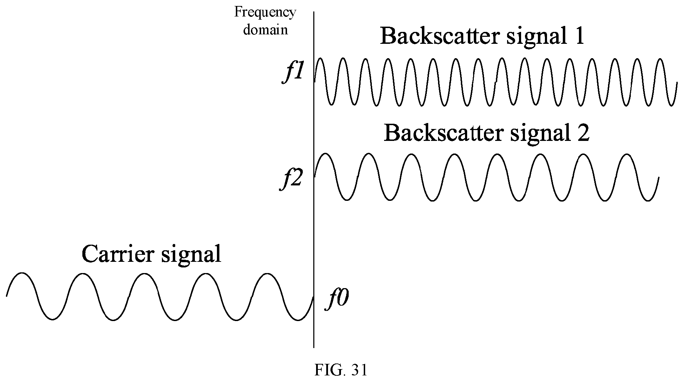

In some embodiments, frequencies of the plurality of backscatter signals obtained by the anchor device may be located on both sides of the first carrier signal, as shown in FIG. 30, or may be located on the same side of the first carrier signal, as shown in FIG. 31. That is, when performing frequency shifting, the anchor device may apply same-polarity frequency offset values, e.g., all positive frequency offset values, or mixed-polarity frequency offset values, e.g., positive and negative frequency offset values.

In some embodiments, the frequency offsets of the plurality of first backscatter signals relative to the first carrier signal are predefined, or determined by the anchor device, or configured by the target device, or configured by a network device.

Optionally, different anchor devices may adopt the same plurality of frequency offsets or different plurality of frequency offsets to perform backscatter.

It should be noted that, for the specific implementation of frequency shifting, reference may be made to the relevant implementation of frequency shifting described in Embodiment 1, which will not be repeated here for the sake of brevity.

In some embodiments, there is a time-domain offset between the plurality of first backscatter signals and the first carrier signal.

In some embodiments, the time-domain offset is predefined, or determined by an anchor device that transmits the plurality of backscatter signals, or configured by the target device, or configured by a network device.

Optionally, different anchor devices may adopt the same plurality of time-domain offsets or different plurality of time-domain offsets to perform backscatter.

It should be noted that, for the specific implementation of time-domain shifting here, reference may be made to the relevant implementation of time-domain shifting described in Embodiment 1, which will not be repeated here for the sake of brevity.

In some embodiments, the first carrier signal is transmitted in a broadcast or multicast manner.

That is, the target device transmits the first carrier signal to the plurality of anchor devices simultaneously. Furthermore, the plurality of anchor devices all perform backscatter based on the first carrier signal to obtain a plurality of backscatter signals having different frequencies.

For example, the plurality of anchor devices transmit their respective multiple backscatter signals using the same plurality of frequency offsets and time-domain offsets.

In another example, each of the plurality of anchor devices transmit a plurality of backscatter signals corresponding to the anchor device using a plurality of corresponding frequency offsets and time-domain offsets.

In some embodiments, the first carrier signal is transmitted in a unicast manner.

For example, the first carrier signal is transmitted by the target device to each anchor device in a point-to-point communication manner. For example, the target device may transmit the first carrier signal to each of the plurality of anchor devices in sequence in a time division mode.

In some embodiments, the plurality of anchor devices may be scheduled by the target device.

It should be noted that, for the way of transmitting the first carrier signal, reference may be made to the way of transmitting the plurality of carrier signals described in Embodiment 1, which will not be repeated here for the sake of brevity.

In some embodiments, the plurality of first backscatter signals may carry modulation information, or may not carry modulation information. For example, the plurality of first backscatter signals may be used only to determine phase information of the backscatter signals, or may be used to determine both the phase information of the backscatter signals and location information of the anchor device.

Optionally, the plurality of first backscatter signals may carry the same information, or may be used to carry different information.

For example, some of the first backscatter signals are used to carry identification information of the anchor device, and the other first backscatter signals are used to carry location information of the anchor device.

In another example, the plurality of backscatter signals are all used to carry first information, and the first information may include the identification information and/or the location information of the anchor device.

In Embodiment 2, the plurality of backscatter signals may be used by the target device to determine the phase information of the backscatter signals. Alternatively, the plurality of backscatter signals may further carry modulation information, e.g., the first information, which is used to determine the location information of the anchor device.

Optionally, in a case where the plurality of backscatter signals are only used to determine the phase information, the plurality of backscatter signals may include a plurality of first backscatter signals, and the plurality of first backscatter signals are used to determine the phase information. For example, each first backscatter signal includes a second portion. For the specific implementation of the second portion, reference may be made to the relevant description in Embodiment 1, which will not be repeated here for the sake of brevity.

Optionally, in a case where the plurality of backscatter signals are used both to determine the phase information and to carry the modulation information, the plurality of backscatter signals may include the plurality of first backscatter signals and a second backscatter signal. The first backscatter signals are used by the target device to determine the phase information of the backscatter signals, and the second backscatter signal is used to carry first information, which is used to determine the location of the anchor device.

Optionally, a frequency of the second backscatter signal is obtained based on backscatter of the first carrier signal, and the frequency of the second backscatter signal is the same as the frequency of the first carrier signal. In some other embodiments, the frequency of the second backscatter signal may be obtained by performing frequency-domain shifting on the frequency of the first carrier signal.

In some embodiments, the plurality of first backscatter signals are earlier than the second backscatter signal, or the plurality of first backscatter signals are later than the second backscatter signal.

In some embodiments, a guard interval is present between the plurality of first backscatter signals and the second backscatter signal. For the specific implementation, please refer to the related implementation of the guard interval in Embodiment 1, which will not be repeated here.

Optionally, in a case where the plurality of first backscatter signals are later than the second backscatter signal, there is a time-domain offset between the second backscatter signal and the first carrier signal. For the specific implementation of the time-domain offset, reference may be made to the relevant implementation of the time-domain offset in Embodiment 1, which will not be repeated here.

Optionally, in a case where the plurality of first backscatter signals are earlier than the second backscatter signal, there is a time-domain offset between the plurality of first backscatter signals and the first carrier signal. For the specific implementation, please refer to the relevant implementation of the time-domain offset in Embodiment 1, which will not be repeated here.

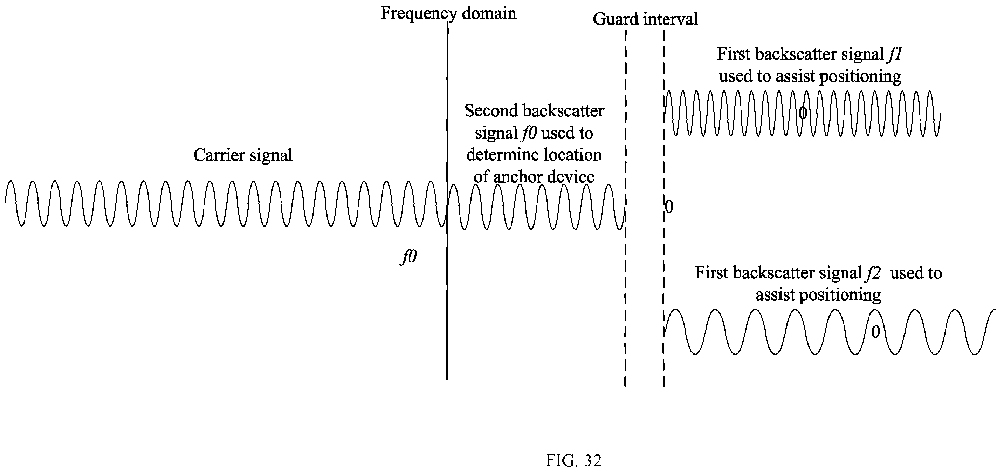

FIG. 32 is a schematic diagram of illustrating backscatter signals transmitted by anchor devices provided in the embodiments of the present application.

In the example shown in FIG. 32, the anchor device may first transmit a second backscatter signal carrying the first information used for determining the location of the anchor device. The frequency of the second backscatter signal is the same as the frequency of the first carrier signal. The anchor device then transmits the plurality of first backscatter signals, and the plurality of first backscatter signals are obtained by backscattering the first carrier signal shifted with different frequency offsets, that is, the plurality of first backscatter signals have different frequencies. Optionally, the first backscatter signal may include a second portion used for determining the phase of the first backscatter signal. For the specific implementation of the second portion, reference may be made to the relevant description in Embodiment 1, which will not be repeated here for the sake of brevity.

It should be understood that, in some other embodiments, the anchor device may first transmit the plurality of first backscatter signals and then transmit the second backscatter signal. The present application does not limit the timing of the plurality of first backscatter signals and the second backscatter signal.

In some other embodiments, a first backscatter signal includes a first portion and/or a second portion. The first portion is used to carry first information, and the first information is used to determine the location of the anchor device. The second portion is used by the target device to determine the phase information of the backscatter signal.

For example, in a case where the backscatter signals transmitted by the anchor device are used to both determine phase information and carry modulation information, a first backscatter signal may include a first portion and a second portion. The first portion may be earlier than the second portion, or the second portion may be later than the first portion. Optionally, a guard interval may exist between the first portion and the second portion. For the specific implementation of the first portion, the second portion, and the guard interval, reference may be made to the relevant implementation in Embodiment 1, which will not be repeated here for the sake of brevity.

In Embodiment 2, the target device may further transmit control information to the anchor device. For the content and transmitting manner of the control information, reference may be made to the relevant implementation in Embodiment 1, which will not be repeated here for the sake of brevity.

In some embodiments, in a case where the backscatter signals are used to carry the modulation information, the anchor device may use the same modulation scheme or different modulation schemes for modulating the plurality of backscatter signals. For example, all backscatter signals are modulated through OOK modulation or FSK modulation, or some backscatter signals are modulated through OOK modulation and some backscatter signals are modulated through FSK modulation.

In some embodiments of the present application, the location information of the target device is calculated by the target device. For example, the target device may determine the location information of the target device according to distance information between the target device and the plurality of anchor devices and the location information of the plurality of anchor devices. In this case, the target device needs to obtain the location information of the plurality of anchor devices.

In some implementations, the location information of an anchor device is transmitted by the anchor device to the target device via a backscatter signal. For example, the first information carries the location information of the anchor device.

In some other implementations, the location information of an anchor device is obtained by the target device from a control node, which has the location information of the plurality of anchor devices stored therein. For example, the first information includes identification information of the anchor device, and the target device may obtain the location information of the anchor device from the control node through the identification information of the anchor device.

The distance between the target device and an anchor device is determined according to phase difference information between the plurality of backscatter signals and the corresponding carrier signals.

In some other embodiments of the present application, the location information of the target device is calculated by the control node. For example, the control node may determine the location information of the target device according to the distance information between the target device and the plurality of anchor devices and the location information of the plurality of anchor devices.

Therefore, the control node needs to obtain the distance information between the target device and the plurality of anchor devices and the location information of the plurality of anchor devices.

In some implementations, the target device may transmit the distance information between the target device and the plurality of anchor devices and the identification information of the plurality of anchor devices to the control node, so that the control node may retrieve the location information of the plurality of anchor devices according to the identification information of the plurality of anchor devices. The control node further determines the location information of the target device based on the distance information between the target device and the plurality of anchor devices and the location information of the plurality of anchor devices, and then transmits the calculated location information of the target device to the target device.

In some embodiments, the control node may be a network device, or other entities having a location management function, e.g., a location management function (LMF) entity.

In summary, in the embodiments of the present application, the target device may determine the distance between the target device and each anchor device based on phase information of a plurality of backscatter signals having different frequencies that are transmitted by the anchor device. Further, the distance between the target device and each anchor device and the location information of the plurality of anchor devices may be used to determine the location information of the target device, thereby achieving device positioning based on backscatter communication. For example, the location information of the target device may be obtained by the target device through calculation based on the above information, or may be obtained by the control node through calculation based on the above information.

In some implementations, the plurality of backscatter signals having different frequencies transmitted by the anchor device are generated based on a plurality of carrier signals having different frequencies. In this case, there may be a frequency-domain offset between a backscatter signal transmitted by the anchor device and a corresponding carrier signal, or there may be no frequency-domain offset.

In some other implementations, the plurality of backscatter signals having different frequencies transmitted by the anchor device are generated based on the same carrier signal shifted with different frequency-domain offsets.

In some implementations, there may be a time-domain offset between the backscatter signals transmitted by the anchor device and the carrier signal.

In some implementations, the carrier signal that used for generating the plurality of backscatter signals may be transmitted in a broadcast, multicast, or unicast manner.

In some implementations, the target device may control the manner in which the anchor device transmits the backscatter signal, such as frequency shifting, time-domain shifting, the signal processing method, the information structure (or frame structure) defined for backscatter signals.

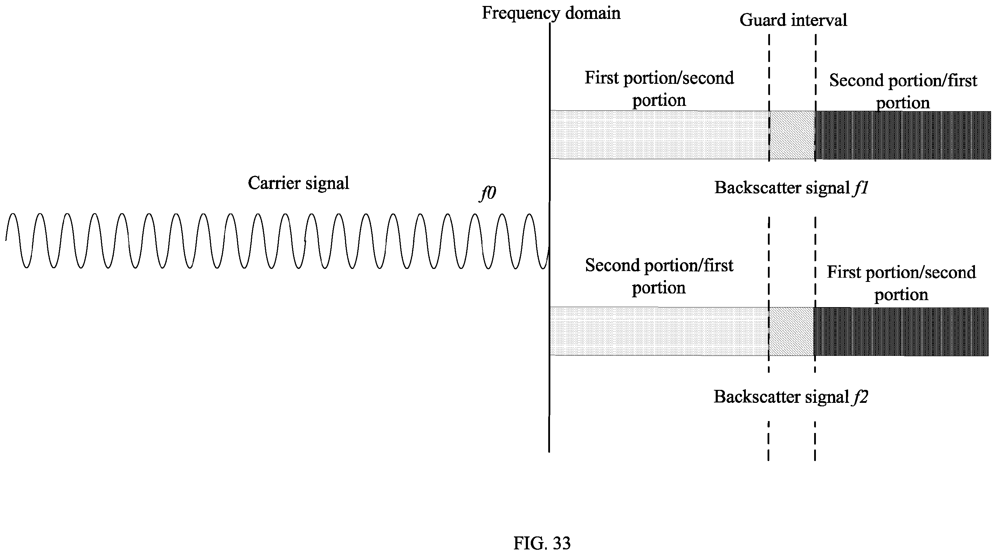

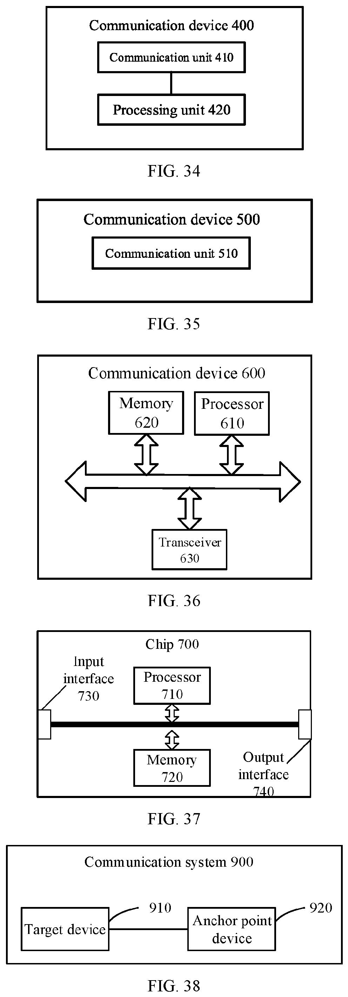

The method embodiments of the present application are described above in detail with reference to FIGS. 11 to 33. The apparatus embodiments of the present application will be described below in detail with reference to FIGS. 34 to 38. It should be understood that the apparatus embodiments and the method embodiments correspond to each other, and similar descriptions may refer to the method embodiments.

FIG. 34 shows a schematic block diagram of a communication device 400 according to the embodiments of the present application. As shown in FIG. 34, the communication device 400 includes:

a communication unit 410, configured to receive a plurality of backscatter signals transmitted by each of a plurality of anchor devices, where the plurality of backscatter signals have different frequencies; and

a processing unit 420, configured to determine distance information between the communication device 400 and each anchor device according to phase information of the plurality of backscatter signals transmitted by each anchor device, where the distance information between the communication device 400 and the plurality of anchor devices is used to determine location information of the communication device 400.

In some embodiments, the plurality of backscatter signals are obtained by backscattering a plurality of carrier signals, and the plurality of carrier signals have different frequencies.

In some embodiments, the plurality of carrier signals are transmitted simultaneously, or the plurality of carrier signals are transmitted in a time division mode.

In some embodiments, transmission of the plurality of carrier signals is completed within a first time window in a case where the plurality of carrier signals are transmitted in the time division mode.

In some embodiments, a length of the first time window is predefined, or determined by the communication device 400.

In some embodiments, frequencies of the plurality of backscatter signals are the same as frequencies of the corresponding carrier signals; or

frequency offsets are present between frequencies of the plurality of backscatter signals and frequencies of the corresponding carrier signals.

In some embodiments, the frequency offsets are predefined, or determined by the anchor device that transmits the plurality of backscatter signals, or configured by the communication device 400.

In some embodiments, whether the anchor device performs frequency shifting on the carrier signals to obtain the backscatter signals is predefined, or whether the anchor device performs frequency shifting on the carrier signals to obtain the backscatter signals is configured by the communication device 400.

In some embodiments, time-domain offsets are present between the plurality of backscatter signals and the plurality of carrier signals.

In some embodiments, the time-domain offsets are predefined, or determined by the anchor device that transmits the plurality of backscatter signals, or configured by the communication device 400.

In some embodiments, a length of a time-domain offset is equal to a time interval between a time-domain position at which the anchor device receives a carrier signal and a time-domain position at which the anchor device starts to transmit a backscatter signal; or a length of a time-domain offset is equal to a time interval between a time-domain position at which the anchor device receives a feature sequence carried in a carrier signal and a time-domain position at which the anchor device starts to transmit a backscatter signal.

In some embodiments, the plurality of carrier signals are transmitted by the communication device 400, or by a device other than the communication device 400 and the anchor device.

In some embodiments, the plurality of carrier signals are transmitted in a broadcast or multicast manner.

In some embodiments, the plurality of carrier signals are transmitted in a unicast manner.

In some embodiments, the plurality of anchor devices are a plurality of anchor devices scheduled by the communication device 400.

In some embodiments, a backscatter signal include a first portion and/or a second portion, where the first portion is used to carry first information, the first information is used to determine a location of the anchor device that transmits the backscatter signals, and the second portion is used by the communication device 400 to determine phase information of the backscatter signal.

In some embodiments, a frequency difference between every two backscatter signals of the plurality of backscatter signals is less than or equal to a first threshold, where the first threshold is associated with a maximum positioning distance; or a frequency difference between every two carrier signals of the plurality of carrier signals is less than or equal to a first threshold, and the first threshold is associated with a maximum positioning distance.

In some embodiments, the plurality of backscatter signals include a plurality of first backscatter signals, and the plurality of first backscatter signals are obtained by backscattering a first carrier signal shifted with different frequency offsets.

In some embodiments, the first carrier signal is transmitted in a broadcast or multicast manner, or the first carrier signal is transmitted in a unicast manner.

In some embodiments, the first carrier signal is transmitted by the communication device 400 or by a device other than the communication device 400 and the anchor device.

In some embodiments, frequency offsets of the plurality of first backscatter signals relative to the first carrier signal are predefined, or determined by the anchor device, or configured by the communication device 400.

In some embodiments, a time-domain offset is present between the plurality of first backscatter signals and the first carrier signal.

In some embodiments, the time-domain offset is predefined, or determined by an anchor device that transmits the plurality of backscatter signals, or configured by the communication device 400.

In some embodiments, a frequency difference between every two first backscatter signals of the plurality of first backscatter signals is less than or equal to the first threshold, and the first threshold is associated with the maximum positioning distance.

In some embodiments, the first backscatter signals are used by the communication device 400 to determine phase information of the backscatter signals.

In some embodiments, the plurality of backscatter signals further include a second backscatter signal, the second backscatter signal is used to carry first information, and the first information is used to determine the location of the anchor device.

In some embodiments, a frequency of the second backscatter signal is obtained based on backscatter of the first carrier signal, and the frequency of the second backscatter signal is the same as the frequency of the first carrier signal.

In some embodiments, there is a time-domain offset between the second backscatter signal and the first carrier signal.

In some embodiments, the time-domain offset is predefined, or determined by an anchor device that transmits the second backscatter signal, or configured by the communication device 400.

In some embodiments, a guard interval is present between the plurality of first backscatter signals and the second backscatter signal.

In some embodiments, the first backscatter signals include a first portion and/or a second portion, the first portion is used to carry first information, the first information is used to determine the location of the anchor device, and the second portion is used by the communication device 400 to determine the phase information of the backscatter signal.

In some embodiments, the first information includes identification information of the anchor device that transmits the backscatter signals and/or location information of the anchor device.

In some embodiments, the first portion is earlier than the second portion, or the second portion signal is earlier than the first portion signal.

In some embodiments, a guard interval is present between the first portion and the second portion.

In some embodiments, durations of the first portion, the second portion and the guard interval are predefined; or durations of the first portion, the second portion and the guard interval are configured.

In some embodiments, the communication unit 410 is further configured to: transmit control information to the plurality of anchor devices, where the control information is used to control a transmitting manner of the plurality of backscatter signals.

In some embodiments, the control information is used to indicate at least one of:

identification information of an anchor device that transmits the plurality of backscatter signals;
a frequency-domain offset used by the anchor device to transmit a backscatter signal;

a time-domain offset used by the anchor device to transmit a backscatter signal;
a signal processing mode used by the anchor device to transmit a backscatter signal; or
an information structure defined for backscatter signals.

In some embodiments, the control information is carried in a carrier signal transmitted by the communication device 400, or the control information is transmitted before the communication device 400 transmits a carrier signal.

In some embodiments, the processing unit 420 is further configured to
determine a distance between the communication device 400 and the anchor device according to phase difference information between the plurality of backscatter signals and the corresponding carrier signals.

In some embodiments, the processing unit 420 is further configured to

in a case where the plurality of backscatter signals include at least three backscatter signals, determine a plurality of distances between the communication device 400 and the anchor device according to phase difference information between every two backscatter signals of the at least three backscatter signals and the corresponding carrier signals; and determine a target distance between the communication device 400 and the anchor device according to the plurality of distances between the communication device 400 and the anchor device.

In some embodiments, the processing unit 420 is further configured to:

allow the communication device 400 to obtain location information of the plurality of anchor devices, and
determine the location information of the communication device 400 according to the distance information between the communication device 400 and the plurality of anchor devices and the location information of the plurality of anchor devices.

In some embodiments, the location information of the plurality of anchor devices is obtained from backscatter signals transmitted by the plurality of anchor devices; or
the location information of the plurality of anchor devices is obtained from a control node according to identification information of the anchor devices carried in backscatter signals transmitted by the plurality of anchor devices, where the control node stores the location information of the plurality of anchor devices.

In some embodiments, the communication unit 410 is further configured to
transmit identification information of the plurality of anchor devices and distance information between the communication device 400 and the plurality of anchor devices to a control node, where the control node stores the location information of the plurality of anchor devices; and receive the location information of the communication device 400 transmitted by the control node.

Optionally, in some embodiments, the communication unit may be a communication interface or a transceiver, or an input/output interface of a communication chip or a system on chip. The processing unit mentioned above may be one or more processors.

It should be understood that the communication device 400 according to the embodiments of the present application may correspond to the target device in the method embodiments of the present application, and the above-mentioned and other operations and/or functions of various units in the communication device 400 are configured to implement the corresponding processes implemented by the target device in the method 200 shown in FIGS. 11 to 33, which will not be repeated here for the sake of brevity.

FIG. 35 is a schematic block diagram of a communication device according to the embodiments of the present application. The communication device 500 shown in FIG. 35 includes:
a communication unit 510, configured to transmit a plurality of backscatter signals having different frequencies to a target device, where phase information of the plurality of backscatter signals transmitted by the communication device 500 is used to determine the distance information between the target device and the communication device 500.

In some embodiments, the plurality of backscatter signals are obtained by backscattering a plurality of carrier signals, where the plurality of carrier signals have different frequencies.

In some embodiments, the plurality of carrier signals are transmitted simultaneously, or the plurality of carrier signals are transmitted in a time division mode.

In some embodiments, in a case where the plurality of carrier signals are transmitted in the time division mode, transmission of the plurality of carrier signals is completed within a first time window.

In some embodiments, a length of the first time window is predefined, or determined by the target device.

In some embodiments, frequencies of the plurality of backscatter signals are the same as frequencies of the corresponding carrier signals; or
frequencies offsets are present between frequencies of the plurality of backscatter signals and frequencies of the corresponding carrier signals.

In some embodiments, the frequency offsets are predefined, or determined by the communication device 500, or configured by the target device.

In some embodiments, whether the communication device 500 performs frequency shifting on the carrier signals to obtain the backscatter signals is predefined, or whether the communication device 500 performs frequency shifting on the carrier signals to obtain the backscatter signals is configured by the target device.

In some embodiments, there are time-domain offsets between the plurality of backscatter signals and the plurality of carrier signals.

In some embodiments, the time-domain offsets are predefined, or determined by the communication device 500, or configured by the target device.

In some embodiments, a length of a time-domain offset is equal to a time interval between a time-domain position at which the communication device 500 receives a carrier signal and a time-domain position at which the communication device 500 starts to transmit a backscatter signal; or

a length of a time-domain offset is equal to a time interval from a time-domain position at which the communication device 500 receives a feature sequence carried in a carrier signal to a time-domain position at which the communication device 500 starts to transmit a backscatter signal.

In some embodiments, the plurality of carrier signals are transmitted by the target device, or by a device other than the target device and the communication device 500.

In some embodiments, the plurality of carrier signals are transmitted in a broadcast or multicast manner.

In some embodiments, the plurality of carrier signals are transmitted in a unicast manner.

In some embodiments, the communication device 500 is a communication device 500 scheduled by the target device.

In some embodiments, the backscatter signals include a first portion and/or a second portion. The first portion is used to carry first information, and the first information is used to determine a location of the communication device 500 that transmits the backscatter signals. The second portion is used by the target device to determine phase information of the backscatter signals.

In some embodiments, a frequency difference between every two backscatter signals of the plurality of backscatter signals is less than or equal to a first threshold, and the first threshold is associated with the maximum positioning distance; or

a frequency difference between every two carrier signals of the plurality of carrier signals is less than or equal to a first threshold, and the first threshold is associated with the maximum positioning distance.

In some embodiments, the plurality of backscatter signals include a plurality of first backscatter signals, and the plurality of first backscatter signals are obtained by backscattering a first carrier signal shifted with different frequency offsets.

In some embodiments, the first carrier signal is transmitted in a broadcast or multicast manner, or the first carrier signal is transmitted in a unicast manner.

In some embodiments, the first carrier signal is transmitted by the target device, or by a device other than the target device and the communication device 500.

In some embodiments, the frequency offsets of the plurality of first backscatter signals relative to the first carrier signal are predefined, or determined by the communication device 500, or configured by the target device.

In some embodiments, there is a time-domain offset between the plurality of first backscatter signals and the first carrier signal.

In some embodiments, the time-domain offset is predefined, or determined by the communication device 500 that transmits the plurality of backscatter signals, or configured by the target device.

In some embodiments, a frequency difference between every two first backscatter signals of the plurality of first backscatter signals is less than or equal to a first threshold, and the first threshold is associated with the maximum positioning distance.

In some embodiments, the first backscatter signals are used by the target device to determine phase information of the backscatter signals.

In some embodiments, the plurality of backscatter signals further include a second backscatter signal, where the second backscatter signal is used to carry first information, and the first information is used to determine the location of the communication device 500.

In some embodiments, the frequency of the second backscatter signal is obtained based on backscatter of the first carrier signal, and the frequency of the second backscatter signal is the same as the frequency of the first carrier signal.

In some embodiments, there is a time-domain offset between the second backscatter signal and the first carrier signal.

In some embodiments, the time-domain offset is predefined, or determined by the communication device 500, or configured by the target device.

In some embodiments, a guard interval is present between the plurality of first backscatter signals and the second backscatter signal.

In some embodiments, the first backscatter signals includes a first portion and/or a second portion, where the first portion is used to carry first information, the first information is used to determine the location of the communication device 500, and the second portion is used by the target device to determine the phase information of the backscatter signals.

In some embodiments, the first information includes identification information of the communication device 500 that transmits the backscatter signal and/or location information of the communication device 500.

In some embodiments, the first portion is earlier than the second portion, or the second portion signal is earlier than the first portion signal.

In some embodiments, a guard interval is present between the first portion and the second portion.

In some embodiments, durations of the first portion, the second portion and the guard interval are predefined; or durations of the first portion, the second portion and the guard interval are configured.

In some embodiments, the communication unit 510 is further configured to

receive control information transmitted by the target device, where the control information is used to control a transmitting mode of the plurality of backscatter signals.

In some embodiments, the control information is used to indicate at least one of: identification information of the communication device 500 that transmits the plurality of backscatter signals;

a frequency-domain offset used by the communication device 500 to transmit a backscatter signal;
a time-domain offset used by the communication device 500 to transmit a backscatter signal;
a signal processing method used by the communication device 500 to transmit a backscatter signal; or
an information structure defined for backscatter signals.

In some embodiments, the control information is carried in a carrier signal transmitted by the target device, or the control information is transmitted before the target device transmits a carrier signal.

Optionally, in some embodiments, the communication unit may be a communication interface or a transceiver, or an input/output interface of a communication chip or a system on chip. The processing unit mentioned above may be one or more processors.

It should be understood that the communication device 500 according to the embodiments of the present application may correspond to the anchor device in the method embodiments of the present application, and the above-mentioned and other operations and/or functions of various units in the communication device 500 are configured to implement the corresponding processes implemented by the anchor device in the method 200 shown in FIGS. 11 to 33, which will not be repeated here for the sake of brevity.

FIG. 36 is a schematic structural diagram of a communication device 600 provided in the embodiments of the present application. The communication device 600 shown in FIG. 36 includes a processor 610, which may call a computer program from a memory and run the computer program to implement the method in the embodiments of the present application.

Optionally, as shown in FIG. 36, the communication device 600 may further include a memory 620. The processor 610 may call a computer program from the memory 620 and run the computer program to implement the method in the embodiments of the present application.

The memory 620 may be a separate device independent of the processor 610, or may be integrated into the processor 610.

Optionally, as shown in FIG. 36, the communication device 600 may further include a transceiver 630, and the processor 610 may control the transceiver 630 to communicate with other devices, specifically, may transmit information or data to other devices, or receive information or data transmitted by other devices.

The transceiver 630 may include a transmitter and a receiver. The transceiver 630 may further include antenna(s), and the number of the antenna(s) may be one or more.

Optionally, the communication device 600 may specifically be the target device in the embodiments of the present application, and the communication device 600 may implement the corresponding processes implemented by the target device in various methods in the embodiments of the present application, which will not be repeated here for the sake of brevity.

Optionally, the communication device 600 may specifically be an anchor device in the embodiments of the present application, and the communication device 600 may implement corresponding processes implemented by the anchor device in various methods in the embodiments of the present application, which will not be repeated here for the sake of brevity.

FIG. 37 is a schematic structural diagram of the chip of the embodiments of the present application. The chip 700 shown in FIG. 37 includes a processor 710, which may call a computer program from a memory and run the computer program to implement the method in the embodiments of the present application.

Optionally, as shown in FIG. 37, the chip 700 may further include a memory 720. The processor 710 may call a computer program from the memory 720 and run the computer program to implement the method in the embodiments of the present application.

The memory 720 may be a separate device independent of the processor 710, or may be integrated into the processor 710.

Optionally, the chip 700 may further include an input interface 730. The processor 710 may control the input interface 730 to communicate with other devices or chips, and specifically, may obtain information or data transmitted by other devices or chips.

Optionally, the chip 700 may further include an output interface 740. The processor 710 may control the output interface 740 to communicate with other devices or chips, and specifically, may output information or data to other devices or chips.

Optionally, the chip may be applied to the target device in the embodiments of the present application, and the chip may implement the corresponding processes implemented by the target device in various methods of the embodiments of the present application, which will not be repeated here for the sake of brevity.

Optionally, the chip may be applied to the anchor device in the embodiments of the present application, and the chip may implement the corresponding processes implemented by the anchor device in the various methods of the embodiments of the present application, which will not be repeated here for the sake of brevity.

It should be understood that the chip mentioned in the embodiments of the present application may also be called a system-level chip, a system chip, a chip system or a system-on-chip chip, etc.

FIG. 38 is a schematic block diagram of a communication system 900 provided in the embodiments of the present application. As shown in FIG. 38, the communication system 900 includes a target device 910 and an anchor device 920.

The target device 910 may be used to implement the corresponding functions implemented by the target device in foregoing methods, and the anchor device 920 may be used to implement the corresponding functions implemented by the anchor device in foregoing methods, which will not be repeated here for the sake of brevity.

It should be understood that the processor in the embodiments of the present application may be an integrated circuit chip and have a processing capability of signals. In the implementation process, various steps of the above method embodiments may be completed by an integrated logic circuit of hardware in the processor or an instruction in a software form. The above processor may be a general-purpose processor, a digital signal processor (DSP), an application specific integrated circuit (ASIC), a field programmable gate array (FPGA) or other programmable logic devices, a discrete gate or transistor logic device, a discrete hardware component. Various methods, steps and logical block diagrams disclosed in the embodiments of the present application may be implemented or performed. A general-purpose processor may be a microprocessor, or the processor may also be any conventional processor, etc. The steps of the method disclosed in combination with the embodiments of the present application may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that the memory in the embodiments of the present application may be a volatile memory or a non-volatile memory, or may include both volatile and non-volatile memories. Herein, the non-volatile memory may be a read-only memory (ROM), a programmable ROM (PROM), an erasable PROM (EPROM), an electrically EPROM (EEPROM) or a flash memory. The volatile memory may be a random access memory (RAM), which is used as an external cache. Through illustrative, rather than limiting illustration, many forms of RAMs are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the system and the method described herein is intended to include, but not limited to, these and any other suitable types of memories.

It should be understood that the above memory is exemplary but not limiting illustration, e.g., the memory in embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM), etc. That is, the memory in the embodiments of the present application is intended to include, but not limited to, these and any other suitable types of memories.

The embodiments of the present application further provide a computer-readable storage medium, which is configure to store a computer program.

Optionally, the computer-readable storage medium may be applied to the target device in the embodiments of the present application, and the computer program enables the computer to perform the corresponding processes implemented by the target device in the various methods in the embodiments of the present application, which will not be repeated here for the sake of brevity.

Optionally, the computer-readable storage medium may be applied to the anchor device in the embodiments of the present application, and the computer program enables the computer to perform the corresponding processes implemented by the anchor device in the various methods in the embodiments of the present application, which will not be repeated here for the sake of brevity.

The embodiments of the present application further provide a computer program product including computer program instructions.

Optionally, the computer program product may be applied to the target device in the embodiments of the present application, and the computer program instructions enable the computer to perform the corresponding processes implemented by the target device in the various methods in the embodiments of the present application, which will not be repeated here for the sake of brevity.

Optionally, the computer program product may be applied to the anchor device in the embodiments of the present application, and the computer program instructions enable the computer to perform the corresponding processes implemented by the anchor device in the various methods in the embodiments of the present application, which will not be repeated here for the sake of brevity.

A computer program is further provided in the embodiments of the present application.

Optionally, the computer program may be applied to the target device in the embodiments of the present application. When running on a computer, the computer program enables the computer to perform the corresponding processes implemented by the target device in the various methods in the embodiments of the present application, which will not be repeated here for the sake of brevity.

Optionally, the computer program may be applied to the anchor device in the embodiments of the present application. When running on a computer, the computer program enables the computer to perform the corresponding processes implemented by the anchor device in the various methods in the embodiments of the present application, which will not be repeated here for the sake of brevity.

Those ordinary skilled in the art may realize that, units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present application.

Those skilled in the art can clearly understand that for the convenience and simplicity of description, the working processes of the systems, devices and units described above may refer to the corresponding processes in the above method embodiments, and details will not be repeated here.

In the several embodiments provided by the application, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present application may be integrated into one processing unit, or the various units may exist physically separately, or two or more units may be integrated into one unit.

If the described functions are implemented in a form of a software functional unit and sold or used as an independent product, they may be stored in a computer readable storage medium. Based on this understanding, the technical solution of the present application essentially, or a part of the technical solution that contributes to the prior art, or a part of the technical solution, may be embodied in a form of a software product, and the computer software product is stored in a storage medium, and includes a plurality of instructions for enabling a computer device (which may be a personal computer, a server, or a network device, etc.) to perform all or some of steps of the methods described in the various embodiments of the present application. And, the storage medium mentioned above includes a USB flash drive (U disk), a mobile hard disk, a read-only memory (ROM), a random access memory (RAM), a diskette, or an optical disk, and various mediums that may store program codes.

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of the claims.

**Claims**

1. A wireless communication method, comprising:

   receiving, by a target device, a plurality of backscatter signals transmitted by each of a plurality of anchor devices, wherein the plurality of backscatter signals have different frequencies; and determining distance information between the target device and each anchor device according to phase information of the plurality of backscatter signals transmitted by each anchor device, wherein distance information between the target device and the plurality of anchor devices is used to determine location information of the target device.

2. The method according to claim 1, wherein the plurality of backscatter signals are obtained by backscattering a plurality of carrier signals, and the plurality of carrier signals have different frequencies.

**3.** The method according to claim 2, wherein the plurality of carrier signals are transmitted simultaneously, or the plurality of carrier signals are transmitted in a time division mode.

**4.** The method according to claim 3, wherein transmission of the plurality of carrier signals is completed within a first time window in a case where the plurality of carrier signals are transmitted in the time division mode.

**5.** The method according to claim 4, wherein a length of the first time window is predefined, or determined by the target device.

**6.** The method according to any one of claims 2 to 5, wherein

frequencies of the plurality of backscatter signals are the same as frequencies of corresponding carrier signals; or
frequency offsets are present between frequencies of the plurality of backscatter signals and frequencies of the corresponding carrier signals.

**7.** The method according to claim 6, wherein the frequency offsets are predefined, or determined by the anchor device that transmits the plurality of backscatter signals, or configured by the target device.

**8.** The method according to claim 6 or 7, wherein

whether the anchor device performs frequency shifting on the carrier signals to obtain the backscatter signals is predefined; or
whether the anchor device performs frequency shifting on the carrier signals to obtain the backscatter signals is configured by the target device.

**9.** The method according to any one of claims 2 to 8, wherein time-domain offsets are present between the plurality of backscatter signals and the plurality of carrier signals.

**10.** The method according to claim 9, wherein the time-domain offsets are predefined, or determined by the anchor device that transmits the plurality of backscatter signals, or configured by the target device.

**11.** The method according to claim 9 or 10, wherein a length of a time-domain offset is equal to a time interval between a time-domain position at which the anchor device receives a carrier signal and a time-domain position at which the anchor device starts to transmit a backscatter signal; or a length of a time-domain offset is equal to a time interval between a time-domain position at which the anchor device receives control information or a feature sequence carried in a carrier signal and a time-domain position at which the anchor device starts to transmit the backscatter signals.

**12.** The method according to any one of claims 2 to 11, wherein the plurality of carrier signals are transmitted by the target device, or by a device other than the target device and the anchor device.

**13.** The method according to any one of claims 2 to 12, wherein the plurality of carrier signals are transmitted in a broadcast or multicast manner.

**14.** The method according to any one of claims 2 to 13, wherein the plurality of carrier signals are transmitted in a unicast manner.

**15.** The method according to claim 14, wherein the plurality of anchor devices are a plurality of anchor devices scheduled by the target device.

**16.** The method according to any one of claims 1 to 15, wherein a backscatter signal comprises a first portion and/or a second portion, the first portion is used to carry first information, the first information is used to determine a location of the anchor device that transmits the backscatter signal, and the second portion is used by the target device to determine phase information of the backscatter signal.

**17.** The method according to any one of claims 2 to 16, wherein a frequency difference between every two backscatter signals of the plurality of backscatter signals is less than or equal to a first threshold, and the first threshold is associated with a maximum positioning distance; or a frequency difference between every two carrier signals of the plurality of carrier signals is less than or equal to a first threshold, and the first threshold is associated with a maximum positioning distance.

**18.** The method according to any one of claims 1 to 17, wherein the plurality of backscatter signals comprise a plurality of first backscatter signals, and the plurality of first backscatter signals are obtained by backscattering a first carrier signal shifted with different frequency offsets.

**19.** The method according to claim 18, wherein the first carrier signal is transmitted in a broadcast or multicast manner, or the first carrier signal is transmitted in a unicast manner.

**20.** The method according to claim 18 or 19, wherein the first carrier signal is transmitted by the target device or a device other than the target device and the anchor device.

21. The method according to any one of claims 18 to 20, wherein frequency offsets of the plurality of first backscatter signals relative to the first carrier signal are predefined, or determined by the anchor device, or configured by the target device.

22. The method according to any one of claims 18 to 21, wherein a time-domain offset is present between the plurality of first backscatter signals and the first carrier signal.

23. The method according to claim 22, wherein the time-domain offset is predefined, or determined by the anchor device that transmits the plurality of backscatter signals, or configured by the target device.

24. The method according to any one of claims 18 to 23, wherein a frequency difference between every two first backscatter signals of the plurality of first backscatter signals is less than or equal to a first threshold, and the first threshold is associated with a maximum positioning distance.

25. The method according to any one of claims 18 to 24, wherein the first backscatter signals are used by the target device to determine the phase information of the backscatter signals.

26. The method according to claim 25, wherein the plurality of backscatter signals further comprise a second backscatter signal, the second backscatter signal is used to carry first information, and the first information is used to determine a location of the anchor device.

27. The method according to claim 26, wherein a frequency of the second backscatter signal is obtained based on backscatter of the first carrier signal, and the frequency of the second backscatter signal is the same as a frequency of the first carrier signal.

28. The method according to claim 26 or 27, wherein a time-domain offset is present between the second backscatter signal and the first carrier signal.

29. The method according to claim 28, wherein the time-domain offset is predefined, or determined by the anchor device that transmits the second backscatter signal, or configured by the target device.

30. The method according to any one of claims 26 to 29, wherein a guard interval is present between the plurality of first backscatter signals and the second backscatter signal.

31. The method according to any one of claims 18 to 24, wherein a first backscatter signal comprises a first portion and/or a second portion, the first portion is used to carry first information, the first information is used to determine a location of an anchor device, and the second portion is used by the target device to determine phase information of the backscatter signal.

32. The method according to claim 16, 26 or 31, wherein the first information comprises identification information of the anchor device that transmits the backscatter signals and/or location information of the anchor device.

33. The method according to claim 16 or 31, wherein the first portion is earlier than the second portion, or the second portion signal is earlier than the first portion signal.

34. The method according to claim 33, wherein a guard interval is present between the first portion and the second portion.

35. The method according to claim 34, wherein

durations of the first portion, the second portion and the guard interval are predefined; or durations of the first portion, the second portion and the guard interval are configured.

36. The method according to any one of claims 1 to 35, wherein the method further comprises:
transmitting, by the target device, control information to the plurality of anchor devices, wherein the control information is used to control a transmitting manner of the plurality of backscatter signals.

37. The method according to claim 36, wherein the control information is used to indicate at least one of:

identification information of the anchor device that transmits the plurality of backscatter signals;
a frequency-domain offset used by the anchor device to transmit a backscatter signal;
a time-domain offset used by the anchor device to transmit a backscatter signal;
a signal processing mode used by the anchor device to transmit a backscatter signal; or
an information structure defined for backscatter signals.

38. The method according to claim 36 or 37, wherein the control information is carried in a carrier signal transmitted by the target device, or the control information is transmitted before the target device transmits a carrier signal.

**39.** The method according to any one of claims 1 to 38, wherein determining the distance between the target device and each anchor device according to the phase information of the plurality of backscatter signals transmitted by each anchor device comprises: determining the distance between the target device and the anchor device according to phase difference information between the plurality of backscatter signals and corresponding carrier signals.

**40.** The method according to claim 39, wherein determining the distance between the target device and the anchor device according to the phase difference information between the plurality of backscatter signals and the corresponding carrier signals comprises:

in a case where the plurality of backscatter signals comprise at least three backscatter signals, determining, by the target device, a plurality of distances between the target device and the anchor device according to phase difference information between every two backscatter signals of the at least three backscatter signals and the corresponding carrier signals; and determining a target distance between the target device and the anchor device according to the plurality of distances between the target device and the anchor device.

**41.** The method according to any one of claims 1 to 40, wherein the method further comprises:

obtaining, by the target device, location information of the plurality of anchor devices; and determining the location information of the target device according to the distance information between the target device and the plurality of anchor devices and the location information of the plurality of anchor devices.

**42.** The method according to claim 41, wherein the location information of the plurality of anchor devices is obtained from backscatter signals transmitted by the plurality of anchor devices; or the location information of the plurality of anchor devices is obtained from a control node according to identification information of the anchor devices carried in backscatter signals transmitted by the plurality of anchor devices, wherein the control node stores location information of the plurality of anchor devices.

**43.** The method according to any one of claims 1 to 40, wherein the method further comprises:

transmitting, by the target device, identification information of the plurality of anchor devices and distance information between the target device and the plurality of anchor devices to a control node, wherein the control node stores location information of the plurality of anchor devices; and receiving, by the target device, the location information of the target device transmitted by the control node.

**44.** A wireless communication method, comprising: transmitting, by an anchor device, a plurality of backscatter signals to a target device, wherein the plurality of backscatter signals have different frequencies, and phase information of the plurality of backscatter signals transmitted by the anchor device is used to determine distance information between the target device and each of the anchor devices.

**45.** The method according to claim 44, wherein the plurality of backscatter signals are obtained by backscattering a plurality of carrier signals, and the plurality of carrier signals have different frequencies.

**46.** The method according to claim 45, wherein the plurality of carrier signals are transmitted simultaneously, or the plurality of carrier signals are transmitted in a time division mode.

**47.** The method according to claim 46, wherein transmission of the plurality of carrier signals is completed within a first time window in a case where the plurality of carrier signals are transmitted in the time division mode.

**48.** The method according to claim 47, wherein a length of the first time window is predefined, or determined by the target device.

**49.** The method according to any one of claims 45 to 48, wherein

frequencies of the plurality of backscatter signals are the same as frequencies of corresponding carrier signals; or frequency offsets are present between frequencies of the plurality of backscatter signals and frequencies of the corresponding carrier signals.

**50.** The method according to claim 49, wherein the frequency offsets are predefined, or determined by the anchor device, or configured by the target device.

**51.** The method according to claim 49 or 50, wherein

whether the anchor device performs frequency shifting on the carrier signals to obtain the backscatter signals is predefined, or

whether the anchor device performs frequency shifting on the carrier signals to obtain the backscatter signals is configured by the target device.

52. The method according to any one of claims 45 to 51, wherein time-domain offsets are present between the plurality of backscatter signals and the plurality of carrier signals.

53. The method according to claim 52, wherein the time-domain offsets are predefined, or determined by the anchor device, or configured by the target device.

54. The method according to claim 52 or 53, wherein a length of a time-domain offset is equal to a time interval between a time-domain position at which the anchor device receives a carrier signal and a time-domain position at which the anchor device starts to transmit a backscatter signal; or
a length of a time-domain offset is equal to a time interval between a time-domain position at which the anchor device receives a feature sequence carried in a carrier signal and a time-domain position at which the anchor device starts to transmit a backscatter signal.

55. The method according to any one of claims 45 to 54, wherein the plurality of carrier signals are transmitted by the target device, or by a device other than the target device and the anchor device.

56. The method according to any one of claims 45 to 55, wherein the plurality of carrier signals are transmitted in a broadcast or multicast manner.

57. The method according to any one of claims 45 to 56, wherein the plurality of carrier signals are transmitted in a unicast manner.

58. The method according to claim 57, wherein the anchor device is an anchor device scheduled by the target device.

59. The method according to any one of claims 44 to 58, wherein a backscatter signal comprises a first portion and/or a second portion, wherein the first portion is used to carry first information, the first information is used to determine a location of the anchor device that transmits the backscatter signal, and the second portion is used by the target device to determine phase information of the backscatter signal.

60. The method according to any one of claims 45 to 59, wherein a frequency difference between every two backscatter signals of the plurality of backscatter signals is less than or equal to a first threshold, and the first threshold is associated with a maximum positioning distance; or
a frequency difference between every two carrier signals of the plurality of carrier signals is less than or equal to a first threshold, and the first threshold is associated with a maximum positioning distance.

61. The method according to any one of claims 44 to 60, wherein the plurality of backscatter signals comprise a plurality of first backscatter signals, and the plurality of first backscatter signals are obtained by backscattering a first carrier signal shifted with different frequency offsets.

62. The method according to claim 61, wherein the first carrier signal is transmitted in a broadcast or multicast manner, or the first carrier signal is transmitted in a unicast manner.

63. The method according to claim 61 or 62, wherein the first carrier signal is transmitted by the target device or a device other than the target device and the anchor device.

64. The method according to any one of claims 61 to 63, wherein frequency offsets of the plurality of first backscatter signals relative to the first carrier signal are predefined, or determined by the anchor device, or configured by the target device.

65. The method according to any one of claims 61 to 64, wherein a time-domain offset is present between the plurality of first backscatter signals and the first carrier signal.

66. The method according to claim 65, wherein the time-domain offset is predefined, or determined by the anchor device that transmits the plurality of backscatter signals, or configured by the target device.

67. The method according to any one of claims 61 to 66, wherein a frequency difference between every two first backscatter signals of the plurality of first backscatter signals is less than or equal to a first threshold, and the first threshold is associated with a maximum positioning distance.

68. The method according to any one of claims 61 to 64, wherein the first backscatter signals are used by the target device to determine phase information of the backscatter signals.

69. The method according to claim 68, wherein the plurality of backscatter signals further comprise a second backscatter signal, the second backscatter signal is used to carry first information, and the first information is used to determine a location of the anchor device.

**70.** The method according to claim 69, wherein a frequency of the second backscatter signal is obtained based on backscatter of the first carrier signal, and the frequency of the second backscatter signal is the same as a frequency of the first carrier signal.

**71.** The method according to claim 69 or 70, wherein a time-domain offset is present between the second backscatter signal and the first carrier signal.

**72.** The method according to claim 71, wherein the time-domain offset is predefined, or determined by the anchor device, or configured by the target device.

**73.** The method according to any one of claims 69 to 72, wherein a guard interval is present between the plurality of first backscatter signals and the second backscatter signal.

**74.** The method according to any one of claims 61 to 67, wherein a first backscatter signal comprises a first portion and/or a second portion, wherein the first portion is used to carry first information, the first information is used to determine a location of the anchor device, and the second portion is used by the target device to determine phase information of the backscatter signal.

**75.** The method according to claim 59, 69 or 74, wherein the first information comprises identification information of the anchor device that transmits the backscatter signal and/or location information of the anchor device.

**76.** The method according to claim 59 or 74, wherein the first portion is earlier than the second portion, or the second portion signal is earlier than the first portion signal.

**77.** The method of claim 76, wherein a guard interval is present between the first portion and the second portion.

**78.** The method according to claim 77, wherein

durations of the first portion, the second portion and the guard interval are predefined; or durations of the first portion, the second portion and the guard interval are configured.

**79.** The method according to any one of claims 44 to 78, wherein the method further comprises: receiving, by the anchor device, control information transmitted by the target device, wherein the control information is used to control a transmitting manner of the plurality of backscatter signals.

**80.** The method according to claim 79, wherein the control information is used to indicate at least one of:

identification information of the anchor device that transmits the plurality of backscatter signals;
a frequency-domain offset used by the anchor device to transmit a backscatter signal;
a time-domain offset used by the anchor device to transmit a backscatter signal;
a signal processing method used by the anchor device to transmit a backscatter signal; or
an information structure defined for backscatter signals.

**81.** The method according to claim 79 or 80, wherein the control information is carried in a carrier signal transmitted by the target device, or the control information is transmitted before the target device sends a carrier signal.

**82.** A communication device, comprising:

a communication unit, configured to receive a plurality of backscatter signals transmitted by each of a plurality of anchor devices, wherein the plurality of backscatter signals have different frequencies; and
a processing unit, configured to determine distance information between the communication device and each anchor device according to phase information of the plurality of backscatter signals transmitted by each anchor device, wherein the distance information between the communication device and the plurality of anchor devices is used to determine location information of the communication device.

**83.** A communication device, comprising:
a communication unit, configured to transmit a plurality of backscatter signals to a target device, wherein the plurality of backscatter signals have different frequencies, and phase information of the plurality of backscatter signals transmitted by the communication device is used to determine distance information between the target device and the communication device.

**84.** A communication device, comprising: a processor and a memory, wherein the memory is configured to store a computer program, and the processor is configured to call and run the computer program stored in the memory to perform the method in any one of claims 1 to 43, or the method in any one of claims 44 to 81.

**85.** A chip, comprising: a processor configured to call a computer program from a memory and run the computer program, to cause a device equipped with the chip to perform the method in any one of claims 1 to 43, or the method in any one of claims 44 to 81.

86. A computer-readable storage medium, configured to store a computer program, wherein the computer program enables a computer to perform the method in any one of claims 1 to 43, or the method in any one of claims 44 to 81.

87. A computer program product, comprising computer program instructions, wherein the computer program instructions enable a computer to perform the method in any one of claims 1 to 43, or the method in any one of claims 44 to 81.

88. A computer program, wherein the computer program enables a computer to perform the method in any one of claims 1 to 43, or the method in any one of claims 44 to 81.

**100**

110

120          120

FIG. 1

| Power harvesting module | Backscatter communication module | Low-power conumption computing module | Sensor module |

Power supply/trigger

Network device

Backscatter communication

Zero-power consumption terminal

FIG. 2

RF

$C$   +q
     -q

$R_L$

FIG. 3

Network device

TX

AMP

Carrier signal

RX

LNA

Backscatter signal

Zero-power
consumption terminal

Logic
processing
module

Power
harvesting
module

FIG. 4

$R_2$

$R_3$

Binary encoding

$L_2$

$L_1$

$C_1$

$R_L$

$S$

$C_2$

FIG. 5

Distance d

$\varphi_T$

Transmitting
circuit

Control
center

Receiving
circuit

$\varphi_R$

Reader

Wavelength λ

$\varphi_d$

Backscatter
signal

$\varphi_{Tag}$

Zero-power
consumption
device

FIG. 6

Target device

Anchor device

Anchor device

Positioning device

──────► Uu signal        ─ ─ ─ ─► Backscatter signal

FIG. 7

Target device

Anchor device

Anchor device

Positioning device

──────► Uu signal        ─ ─ ─ ─► Backscatter signal

FIG. 8

Uu signal    — — — —▸ Backscatter signal

FIG. 9

Uu signal    — — — —▸ Backscatter signal

FIG. 10

200

| Target device | | Anchor device-1 | • • • | Anchor device-N |

S210, a plurality of backscatter signals, the plurality of backscatter signals have different frequencies

S220, determining distance information between the target device and each anchor device according to phase information of the plurality of backscatter signals transmitted by each anchor device

FIG. 11

Distance: d

Target device

Anchor device

————▶ Power supply signal & trigger signal    – – – ▶ Backscatter signal

FIG. 12

FIG. 13

FIG. 14

FIG. 15

Frequency domain

*f1*

*f2*

*f3*

Time window

Time domain

FIG. 16

Frequency
domain

*f1*

*f2*

*f3*

*f4*

*f1*

*f2*

Time
window

Time domain

FIG. 17

Frequency domain

*f1*

Target
device

Anchor device

Backscatter signal without frequency offsets

FIG. 18

Frequency domain

*f1*

*f1'*

Target device

Anchor device

Backscatter signal with frequency offset

FIG. 19

Time of arrival of carrier signal

Signal received by anchor device

Anchor device backscatter signal

Time-domain offset

backscatter communication timing

FIG. 20

Time of arrival of carrier signal

Signal received by anchor device

Anchor device backscatter signal

Control information/feature sequence

Time-domain offset

Backscatter communication timing

FIG. 21

FIG. 22

FIG. 23

Time of arrival of carrier signal

Signal received by anchor device

Time-domain offset | First portion | Guard interval | Second portion

Anchor device backscatter signal

Control information/feature sequence

Backscatter communication timing

FIG. 24

Time of arrival of carrier signal

Signal received by anchor device

Time-domain offset | Second portion | Guard interval | First portion

Anchor device backscatter signal

Control information/feature sequence

Backscatter communication timing

FIG. 25

Carrier signal

Control information portion | Carrier portion

Signal transmitted by target device

FIG. 26

Signal
transmitted
by target
device

Control signal
(control information)

Carrier signal

FIG. 27

*f0*

Target
device

*f1*
*f2*

Anchor device

FIG. 28

Target
device

*f1*
*f2*

Anchor
device

*f0*

Third-party
device

FIG. 29

Frequency
domain

Backscatter signal 1

*f1*

Carrier
signal

*f0*

Backscatter signal 2

*f2*

FIG. 30

FIG. 31

Frequency domain  Guard interval

First backscatter signal *f1*
used to assist positioning

Second backscatter
signal *f0* used to
determine location
of anchor device

Carrier signal

*f0*

First backscatter signal *f2* used to
assist positioning

FIG. 32

Frequency domain

Guard interval

First portion/second portion | Second portion/first portion

Carrier signal   $f0$

Backscatter signal $f1$

Second portion/first portion | First portion/second portion

Backscatter signal $f2$

FIG. 33

Communication device 400

Communication unit 410

Processing unit 420

FIG. 34

Communication device 500

Communication unit 510

FIG. 35

Communication device 600

Memory 620

Processor 610

Transceiver 630

FIG. 36

Chip 700

Input interface 730

Processor 710

Memory 720

Output interface 740

FIG. 37

Communication system 900

Target device

910

Anchor point device

920

FIG. 38

## INTERNATIONAL SEARCH REPORT

| International application No. |
|---|
| **PCT/CN2022/135094** |

**A. CLASSIFICATION OF SUBJECT MATTER**

H04L27/00(2006.01)i

According to International Patent Classification (IPC) or to both national classification and IPC

**B. FIELDS SEARCHED**

Minimum documentation searched (classification system followed by classification symbols)

H04L,H04W,H04B

Documentation searched other than minimum documentation to the extent that such documents are included in the fields searched

Electronic data base consulted during the international search (name of data base and, where practicable, search terms used)

CNTXT, ENTXTC, WPABSC, ENTXT, WPABS, CNKI, 3GPP: 反向散射信号, 频率, 不同, 相位, 锚点, 位置, 距离, 时分, 定位, back scattering signal, frequency, different, phase, position, location, distance, time division

**C. DOCUMENTS CONSIDERED TO BE RELEVANT**

| Category* | Citation of document, with indication, where appropriate, of the relevant passages | Relevant to claim No. |
|---|---|---|
| X | CN 114731197 A (GUANGDONG OPPO MOBILE COMMUNICATIONS CO., LTD.) 08 July 2022 (2022-07-08) description, paragraphs [0053]-[0060] | 1-88 |
| A | CN 109313252 A (INTEL CORP.) 05 February 2019 (2019-02-05) entire document | 1-88 |
| A | CN 115053463 A (GUANGDONG OPPO MOBILE COMMUNICATIONS CO., LTD.) 13 September 2022 (2022-09-13) entire document | 1-88 |
| A | US 2020034583 A1 (HAND HELD PRODUCTS, INC.) 30 January 2020 (2020-01-30) entire document | 1-88 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 February 2023** | **20 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.

**PCT/CN2022/135094**

| Patent document cited in search report | | | Publication date (day/month/year) | Patent family member(s) | | | Publication date (day/month/year) |
|---|---|---|---|---|---|---|---|
| CN | 114731197 | A | 08 July 2022 | None | | | |
| CN | 109313252 | A | 05 February 2019 | WO | 2017222510 | A1 | 28 December 2017 |
| | | | | US | 2019346554 | A1 | 14 November 2019 |
| | | | | US | 11079484 | B2 | 03 August 2021 |
| CN | 115053463 | A | 13 September 2022 | None | | | |
| US | 2020034583 | A1 | 30 January 2020 | US | 10810387 | B2 | 20 October 2020 |
| | | | | EP | 3608827 | A1 | 12 February 2020 |
| | | | | EP | 3608827 | B1 | 27 April 2022 |

Form PCT/ISA/210 (patent family annex) (July 2022)